# EUROPÄISCHE PATENTANMELDUNG

(11) **EP 4 696 625 A1**
(43) Veröffentlichungstag der Anmeldung: **18.02.2026**
(21) Anmeldenummer: 24194333.1
(22) Anmeldetag: 13.08.2024
(51) Int. Cl.: B65G 54/02

(54) **MAGNETISCH LEVITIERBARE TRANSPORTEINHEIT, DIE BERÜHRUNGSLOS VON WENIGSTENS EINEM SEKTOR EINER ANTRIEBSFLÄCHE MIT ENERGIE VERSORGBAR UND IN WENIGSTENS ZWEI FREIHEITSGRADEN AUF DIESER BEWEGBAR IST, VERWENDUNG EINER MAGNETISCH LEVITIERBAREN TRANSPORTEINHEIT**

(71) Anmelder: TT Innovation AG, 6343 Rotkreuz (CH)
(72) Erfinder: Geiser, Christoph Joschi, 4103 Bottmingen (CH); Müller, Mathieu, 68510 Sierentz (FR); Zeller, Mike, 4246 Wahlen (CH)
(74) Vertreter: Mertzlufft-Paufler, Cornelius

(57) **Zusammenfassung**

Der Erfindung liegt die Aufgabe zugrunde, eine magnetisch levitierbare Transporteinheit mit einem über eine Kommunikationsschnittstelle ansprechbaren Verbraucher berührungslos auf wenigstens einem Sektor einer Antriebsfläche mit Energie zu versorgen und einen Bewegungsablauf der Transporteinheit auf der Antriebsfläche auf einen Funktionsablauf des Verbrauchers zu synchronisieren, um wenigstens ein Erzeugnis über von der Transporteinheit anzufahrende Prozessstationen und/oder weitere Verbraucher wenigstens einer weiteren, zweiten Transporteinheit durch wenigstens eine von dem Verbraucher durchgeführten Aktion zu verarbeiten, beziehungsweise zu prozessieren

## Beschreibung

Die Erfindung betrifft eine magnetisch levitierbare Transporteinheit, die, insbesondere streckenweise und/oder zeitweise, berührungslos von wenigstens einem Sektor einer Antriebsfläche mit Energie versorgbar und in wenigstens zwei, vorzugsweise wenigstens drei Freiheitsgraden, auf dieser bewegbar ist, wobei die Transporteinheit einen Verbraucher hat.

Die Erfindung betrifft schließlich eine Verwendung der oder einer magnetisch levitierbaren Transporteinheit, wobei die Transporteinheit, insbesondere streckenweise und/oder zeitweise, mit Energie versorgbar ist und/oder diese oder zumindest Teile davon vorzugsweise zwischenspeichert, wobei sich die Transporteinheit in einer kontrollierten Umgebung befindet, wobei die Transporteinheit zu verarbeitende Erzeugnisse transportiert, wobei zwischen einem Aufnehmen eines unverarbeiteten/unprozessierten Erzeugnisses und/oder abgeben eines verarbeiteten/prozessierten Erzeugnisses wenigstens eine Aktion von dem oder einem Verbraucher und/oder von dem oder einem Teil des Verbrauchers der Transporteinheit ausgeführt wird.

Levitierbare Transporteinheiten sind aus der Praxis bekannt, beispielsweise als Teil eines Planarmotors, wie das System "Xplanar" der Beckhoff Automation GmbH & Co. KG aus Verl in Deutschland oder des Systems "ctrlX FLOW^{6D}" der Bosch Rexroth AG aus Lohr am Main in Deutschland, und werden beispielsweise eingesetzt, um eine Nutzlast in kontrollierter Weise zu bewegen und/oder zu halten.

Der Begriff der Levitation kann hierbei beispielsweise dadurch charakterisierbar sein, dass eine mit wenigstens einem Permanentmagneten ausgerüstete oder anderweitig magnetisch aktive Transporteinheit in einem kontrolliert geformten Magnetfeld schwebt und/oder durchgesteuerte Veränderung des Magnetfelds bewegt wird. Dieses stationäre Magnetfeld kann beispielsweise mit einem Levitationserzeuger bereitstellbar sein.

Der Erfindung liegt die Aufgabe zu Grunde, eine Möglichkeit zur Ansprechbarkeit eines auf einer magnetisch levitierbaren Transporteinheit ausgebildeten Verbrauchers und/oder eines Teils des Verbrauchers zur kontrollierten, präzisen, effizienten und schnellen Durchführung von Aktionen zu generieren und/oder um eine Position und/oder eine Bewegung des Verbrauchers und/oder der Transporteinheit zu bestimmen und/oder zu überwachen.

Zur Lösung der genannten Aufgabe sind erfindungsgemäß die Merkmale des Anspruchs 1 vorgesehen. Insbesondere wird somit zur Lösung der genannten Aufgabe bei einer magnetisch levitierbaren Transporteinheit der eingangs beschriebenen Art erfindungsgemäß vorgeschlagen, dass eine Kommunikationsschnittstelle ausgebildet ist, über die der Verbraucher und/oder zumindest ein Teil des Verbrauchers berührungslos ansprechbar ist.

Der Verbraucher kann dabei beispielsweise ein Elektromotor sein, mit dem ein Teil des Verbrauchers, beispielsweise ein Roboterarm mit Greifarm, angetrieben wird. Der Verbraucher kann dabei beispielsweise von dem Sektor zeitweise und/oder abschnittsweise mit Energie, beispielsweise geladen, werden.

Der wenigstens ein Sektor der Antriebsfläche kann dabei beispielsweise von wenigstens einer Kachel oder mehrerer Kacheln einer kontrollierten Umgebung, die weiter unten näher spezifiziert ist, gebildet sein, wobei die wenigstens eine Kachel vertikal und/oder schräg angeordnet sein kann. Somit ist auch eine vertikale, horizontale und/oder schräge Energieübertragung ermöglicht. Eine Kachel kann dabei beispielsweise eine kleinste Einheit sein, mit der ein levitierendes und/oder antreibendes Magnetfeld erzeugbar ist, über das die Transporteinheit levitiert und/oder bewegt werden kann. Die Antriebsfläche und/oder die beispielshaft genannte Kachel kann dabei vorzugsweise bewegbar sein und/oder bewegbare Elemente aufweisen.

Die Versorgung der Transporteinheit mit Energie kann beispielsweise über eine induktive Kopplung zwischen Transporteinheit und Antriebsfläche erfolgen. Unter der insbesondere streckenweisen, berührungslosen Energieversorgung der Transporteinheit auf dem wenigstens einen Sektor der Antriebsfläche kann beispielsweise verstanden werden, dass die Transporteinheit lediglich abschnittsweise auf dem Sektor, oder aber bei mehreren Sektoren, nur auf einzelnen Sektoren der Antriebsfläche berührungslos mit Energie versorgt wird.

Unter der insbesondere zeitweisen, berührungslosen Energieversorgung der Transporteinheit kann beispielsweise verstanden werden, dass die Transporteinheit vorzugsweise lediglich dann von einem Abschnitt des Sektors, des gesamten Sektors und/oder, bei mehreren Sektoren, von allen oder einzelnen, vorzugsweise vorbestimmten Sektoren der Antriebsfläche mit Energie versorgt wird, wenn ein vorbestimmtes Zeitintervall verstrichen ist. Beispielsweise kann dabei auch vorgesehen sein, dass die Transporteinheit die Energie zwischenspeichert, wobei zum Aufladen einer Speichereinheit ein vorbestimmter Sektor der Antriebsfläche angefahren wird. Ferner kann beispielsweise vorgesehen sein, dass die Energieversorgung zeitweise und streckenweise erfolgt, sodass beispielsweise vorgesehen sein kann, dass sich die Transporteinheit über eine bestimmte Zeit auf einem bestimmten Sektor befindet, sodass die Speichereinheit vorzugsweise aufgeladen werden kann.

Die magnetisch levitierbare Transporteinheit kann beispielsweise ein Mover sein, der dazu ausgebildet sein kann, vorzugsweise pharmazeutische, Erzeugnisse aufzunehmen und/oder diese mittels des wenigstens einen Verbrauchers und/oder des wenigstens einen Teils des Verbrauchers zu verarbeiten und/oder zu prozessieren.

Die wenigstens zwei Freiheitsgrade, vorzugsweise wenigstens drei Freiheitsgrade, in denen die Transporteinheit auf der Antriebsfläche bewegbar ist, kann beispielsweise eine Bewegung in eine x-, y-, und/oder z-Richtung der Antriebsfläche sein. Somit kann sich die Transporteinheit auf der Antriebsfläche beispielsweise vor, zurück, hinauf, hinunter, nach links und/oder nach rechts bewegen. Hier kann beispielsweise auch vorgesehen sein, dass die Transporteinheit berührungslos über die Energieversorgung gekippt und/oder gedreht werden kann. Besonders vorteilhaft kann somit eine unabhängige Bewegung der Transporteinheit auf der Antriebsfläche erfolgen. Ferner ist vorteilhaft, dass Bewegungswege der Transporteinheit an unterschiedliche Anforderungen angepasst und/oder spontan berührungslos geändert werden können.

Die Kommunikationsschnittstelle, über die der Verbraucher und/oder zumindest ein Teil des Verbrauchers berührungslos ansprechbar ist, kann beispielsweise von einem Sensor auf dem wenigstens einen Sektor der Antriebsfläche und/oder von einem Sensor einer Prozessstation, die vorzugsweise ebenfalls einen Verbraucher und/oder ein Teil eines Verbrauchers aufweist, gebildet sein, wobei der Verbraucher und/oder ein Teil des Verbrauchers jeweils als Aktor fungieren kann, der vorzugsweise auf Basis elektrischer Signale des Sensors oder verschiedener Sensoren verschiedene Aktionen ausführt.

Beispielsweise kann auch vorgesehen sein, dass der Sensor allgemein an verschiedenen Positionen innerhalb und/oder außerhalb der weiter unten näher spezifizierten kontrollierten Umgebung ausgebildet, beziehungsweise angeordnet, sein kann.

Alternativ oder zusätzlich kann beispielsweise vorgesehen sein, dass der Sensor auf einer weiteren Transporteinheit ausgebildet ist und dass der Sensor wiederum beispielsweise mit dem Verbraucher und/oder einem Teil des Verbrauchers der Transporteinheit kommuniziert.

Unter der Begrifflichkeit "ansprechbar" kann beispielsweise ein steuern, regeln und/oder verwalten von Signalen der Kommunikationsschnittstelle sein, über die verschiedene Aktionen von dem Verbraucher und/oder einem Teil des Verbrauchers durchgeführt werden können, ohne diesen beispielsweise vorzuprogrammieren.

Es ist ferner vorteilhaft, dass der Verbraucher und/oder zumindest ein Teil des Verbrauchers berührungslos ansprechbar ist, da somit insbesondere verhindert werden kann, dass der Verbraucher und/oder die Transporteinheit zum Ändern eines Prozessablaufs, beispielsweise einer vorbestimmten Bewegung der Transporteinheit auf der Antriebsfläche und/oder einer vorbestimmten Bewegung, beispielsweise einer vorbestimmten Aktion des Verbrauchers und/oder zumindest eines Teils des Verbrauchers, aus einem laufenden Prozess herausgenommen werden muss. Variierende Bewegungsabläufe und/oder anderweitige physikalische Eigenschaften der Transporteinheit und/oder des Verbrauchers und/oder eines Teils des Verbrauchers können somit ständig an unterschiedliche Bedingungen angepasst werden.

Besonders vorteilhaft können mittels der Kommunikationsschnittstelle sämtliche physikalische Größen der Transporteinheit und/oder des Verbrauchers und/oder zumindest eines Teils des Verbrauchers bestimmt werden, insbesondere können physikalische Eigenschaften der Transporteinheit beispielsweise in Bezug auf physikalische Eigenschaften des Verbrauchers und/oder zumindest eines Teils des Verbrauchers ermittelt werden. Somit kann beispielsweise eine Geschwindigkeit einer von dem Verbraucher und/oder einem Teil des Verbrauchers durchgeführten Aktion mit einer Position der Transporteinheit ermittelt und beide physikalischen Größen miteinander abgeglichen werden und umgekehrt. Auch eine Abstimmung der physikalischen Größen zueinander kann dabei ermöglicht sein.

Ferner kann beispielsweise vorgesehen sein, dass eine Position der Transporteinheit auf der Antriebsfläche und eine Position zumindest eines Abschnitts des Verbrauchers auf der Antriebsfläche ermittelt wird. Somit kann beispielsweise vorteilhaft eine Position der Transporteinheit und eine Position eines als Teil eines Verbrauchers ausgebildeten Greifarms bestimmt und beide Positionen aufeinander abgestimmt werden. Somit kann mit dem Greifarm, welcher vorzugsweise auf einer Transporteinheit als Verbraucher oder zumindest als Bestandteil des Verbrauchers ausgebildet ist, beispielsweise ein zu verarbeitendes, beziehungsweise zu prozessierendes, Erzeugnis, beispielsweise ein pharmazeutisches Behältnis, welches beispielsweise auf einer weiteren Transporteinheit positioniert ist, über die Positionsermittlung ein präzises Greifen des Behältnisses realisiert werden. Dabei kann beispielsweise auch vorgesehen sein, dass die Geschwindigkeit des Greifarms und/oder der Transporteinheit(en) ermittelt wird.

Somit kann also beispielsweise eine Geschwindigkeit der Transporteinheit und/oder eine Geschwindigkeit einer von dem Verbraucher und/oder zumindest eines Teils des Verbrauchers ausgeführten Aktion, beispielsweise einer Geschwindigkeit der Aktion des Verbrauchers, beispielsweise die Geschwindigkeit, in der das Behältnis von dem Greifarm gegriffen wird, ermittelt werden.

Alternativ oder zusätzlich kann vorgesehen sein, dass eine Position der Transporteinheit und/oder eine Position des Verbrauchers und/oder des zumindest einen Teils des Verbrauchers auf der Antriebsfläche ermittelt wird.

Sämtliche ermittelten Positions- und/oder Geschwindigkeitsdaten der Transporteinheit und/oder des Verbrauchers und/oder zumindest eines Teils des Verbrauchers können schließlich vorteilhafterweise angepasst und/oder miteinander synchronisiert werden.

Besonders vorteilhaft ist hierbei, dass somit bestimmt werden kann, ob die Transporteinheit und/oder der Verbraucher und/oder zumindest ein Teil des Verbrauchers eine vorbestimmte Bewegung durchgeführt und/oder eine bestimmte Position erreicht hat.

Die Kommunikationsschnittstelle kann beispielsweise von einem Encoder und einem als Verbraucher ausgebildeten Elektromotor gebildet sein, wobei der Encoder beispielsweise eine Bewegung des Elektromotors regelt und/oder steuert. Beispielsweise kann über den Encoder, insbesondere durch eine Signalverarbeitung eines von einer übergeordneten Steuerung übertragenen Signals, bestimmt werden, wann und wie schnell sich er Elektromotor drehen soll, wodurch sich wiederum beispielsweise zumindest ein Teil des Verbrauchers, beispielsweise ein Roboterarm, antreiben lässt.

Ferner kann die Kommunikationsschnittstelle beispielsweise zur Positionsüberwachung der Transporteinheit und/oder des Verbrauchers und/oder zumindest eines Teils des Verbrauchers dienen. Beispielsweise kann vorgesehen sein, dass der Verbraucher und/oder zumindest ein Teil des Verbrauchers auf der Transporteinheit ausgebildet ist, wobei der Verbraucher abschnittsweise beispielsweise als ein mit einem ein- und ausfahrbaren Hubkolben versehener Elektrozylinder ausgebildet sein kann. Mittels der als Positionsüberwachungseinheit ausgebildeten Kommunikationsschnittstelle kann somit beispielsweise und vorteilhaft bestimmt werden, wie weit der Hubkolben ein- und/oder ausgefahren ist.

Bei einer weiteren vorteilhaften Ausgestaltung der Erfindung kann vorgesehen sein, dass mit der Kommunikationsschnittstelle ein Stellweg des Verbrauchers und/oder ein Stellweg eines Teils des Verbrauchers auf eine Position der Transporteinheit abstimmbar ist.

Ist der Verbraucher und/oder ein Teil des Verbrauchers beispielsweise, wie weiter unten beschrieben und beansprucht, als motorisch angetriebenes Teil ausgebildet, ist es unabdingbar, dass eine Aktion des Verbrauchers und/oder des Teils des Verbrauchers, beispielsweise eine Bewegung des motorisch angetriebenen Teils, nicht zufällig erfolgt, sondern genauestens bestimmt ist und erst dann durchgeführt wird, sobald dies erforderlich ist. Somit ist besonders vorteilhaft, dass der Stellweg des Verbrauchers und/oder zumindest eines Teils des Verbrauchers auf die Position des Transporteinheit abstimmbar ist. Dies kann beispielsweise bedeuten, dass eine Aktion des Verbrauchers, beispielsweise eine Bewegung des motorisch angetriebenen Teils, erst dann erfolgt, wenn die Transporteinheit eine vorbestimmte Position auf der Antriebsfläche erreicht hat.

Als Stellweg kann beispielsweise eine jede Bewegung des Verbrauchers und/oder zumindest eines Teils des Verbrauchers, beispielsweise des motorisch angetriebenen Teils, in x-, y-, und/oder z-Richtung sein. Darüber hinaus kann durch eine entsprechende Abstimmbarkeit zwischen dem Stellweg des Verbrauchers und/oder dem Teil des Verbrauchers und der Position der Transporteinheit verhindert werden, dass der Verbraucher und/oder zumindest ein Teil des Verbrauchers mit verschiedenen die Transporteinheit umgebenden Elementen, beispielsweise eines weiteren Verbrauchers und/oder wenigstens einem weiteren Teil eines weiteren verbrauchers einer weiteren Transporteinheit und/oder einer Prozessstation kollidiert. Auch kann der durch eine Bewegung auf der Transporteinheit ausgeführten Kraftkomponente ein entsprechendes "Gegenmagnetfeld" aufgebaut werden, damit die Transporteinheit noch wie gewollt levitiert wird und es nicht zu einem Crash kommt (Actio = reactio). Ist das motorisch angetriebene Teil beispielsweise als antreibbare Hubvorrichtung, wie weiter unten näher spezifiziert, ausgebildet, kann somit vorteilhafterweise erreicht werden, dass die Levitation der Transporteinheit trotz ausfahrbarem Hubkolben gleich bleibt. Während des Ausfahrens des Kolbens entsteht dabei eine Kraftkomponenten, die, falls kein Gegenmagnetfeld aufgebracht würde, die Levitation der Transporteinheit immer geringer wird, bis diese mit der Antriebsfläche kollidiert.

Alternativ oder zusätzlich kann vorgesehen sein, dass mit der Kommunikationsschnittstelle ein Stellweg des Verbrauchers und/oder ein Stellweg eines Teils des Verbrauchers auf eine Bewegungsrichtung der Transporteinheit abstimmbar ist.

Dabei kann beispielsweise vorgesehen sein, dass der Stellweg des Verbrauchers und/oder zumindest ein Teil des Verbrauchers in der Bewegungsrichtung der Transporteinheit liegt. Somit kann sich der Verbraucher und/oder ein Teil des Verbrauchers vorteilhafterweise weiter, schneller, präziser und/oder kontrollierter, auch überwachter, als die Transporteinheit bewegen.

Beispielsweise kann auch vorgesehen sein, dass die Transporteinheit eine Prozessstation anfährt, wobei von dem Verbraucher und/oder zumindest einem Teil des Verbrauchers eine Aktion an der Prozessstation ausgeführt werden soll. Je nach auszuführender Aktion des Verbrauchers und/oder des Teils des Verbrauchers an der Prozessstation kann durch die Abstimmbarkeit zwischen dem Stellweg und der Position der Transporteinheit und beispielsweise alternativ oder zusätzlich der Abstimmbarkeit zwischen dem Stellweg des Verbrauchers und/oder dem Stellweg zumindest eines Teils des Verbrauchers und der Position der Transporteinheit bereits verschiedene, präventive Aktionen des Verbrauchers und/oder zumindest eines Teils des Verbrauchers durchgeführt werden, bevor die Prozessstation erreicht ist, die zu einer schnelleren und/oder effizienteren Durchführung des nachfolgenden Prozesses führen. Dies kann beispielsweise ein Vorausfahren des oder eines Hubkolbens des oder eines Hydraulikzylinders auf eine vorbestimmte Position während der Bewegung der Transporteinheit in Richtung der anzufahrenden Prozessstation sein, sodass die Zeit zum Ausfahren des Hubkolbens auf eine bestimmte Endposition des Hubkolbens an der Prozessstation reduziert werden kann.

Alternativ oder zusätzlich kann vorgesehen sein, dass mit der Kommunikationsschnittstelle ein Stellweg des Verbrauchers und/oder ein Stellweg eines Teils des Verbrauchers auf eine Position zumindest eines Teils eines zweiten Verbrauchers abstimmbar ist.

Dabei kann beispielsweise vorgesehen sein, dass zwei Transporteinheiten jeweils einen Verbraucher und/oder zumindest jeweils einen Teil eines Verbrauchers aufweisen und dass beide Transporteinheiten berührungslos von dem wenigstens einen Sektor der Antriebsfläche berührungslos mit Energie versorgbar und auf diesem bewegbar sind. Besonders vorteilhaft kann durch eine Abstimmbarkeit zwischen beiden Verbrauchern und/oder zwischen den Teilen des Verbrauchers erreicht werden, dass diese zumindest zeitweise und/oder streckenweise miteinander kommunizieren und/oder interagieren.

Alternativ oder zusätzlich kann vorgesehen sein, dass mit der Kommunikationsschnittstelle ein Stellweg des Verbrauchers und/oder ein Stellweg eines Teils des Verbrauchers auf eine Bewegungsrichtung des oder eines zweiten Verbrauchers abstimmbar ist.

Dabei kann beispielsweise vorgesehen sein, dass der erste und der zweite Verbraucher der ersten und der zweiten Transporteinheit und/oder jeweil ein Teil des ersten und zweiten Verbrauchers als, wie weiter unten beschrieben und beansprucht, motorisch angetriebene Teile, beispielsweise als Roboterarme, ausgebildet sind. Dadurch, dass die Bewegungsrichtung des ersten Roboterarms auf die Bewegungsrichtung des zweiten Roboterarms abstimmbar ist, kann besonders vorteilhaft beispielsweise ein mittels der Roboterarme zu verarbeitende Erzeugnisse, beispielsweise ein Behältnis, von der ersten Transporteinheit von dem ersten Roboterarm über den zweiten Roboterarm an die zweite Transporteinheit übergeben werden.

Bei einer weiteren vorteilhaften Ausgestaltung der Erfindung kann vorgesehen sein, dass der Verbraucher und/oder ein Teil des Verbrauchers ein motorisch angetriebenes Teil ist.

Besonders vorteilhaft können durch verschiedene motorisch angetriebene Teile unterschiedliche Prozessabläufe auf der Transporteinheit durchgeführt und/oder automatisiert gesteuert werden.

Insbesondere ist das motorisch angetriebene Teil ein Roboter.

Hierbei kann beispielsweise vorgesehen sein, dass der Verbraucher selbst den oder einen Elektromotor bildet und dass der Roboter den Teil des Verbrauchers bildet, über den verschiedene Aktionen ausführbar sind.

Der Roboter kann dabei beispielsweise von dem oder einem, beispielsweise dem bereits erwähnten, Roboterarm gebildet sein. Roboter bilden im Allgemeinen den hervorragenden Vorteil, dass diese individuell programmierbar und automatisierbar sind, wobei zusätzlich ein hohes Maß an Präzision verschiedener von dem Roboter durchzuführender Aktionen erreichbar ist.

Alternativ oder zusätzlich kann vorgesehen sein, dass das motorisch angetriebene Teil insbesondere ein Greifelement ist.

Dabei kann beispielsweise vorgesehen sein, dass das Greifelement motorisch angetrieben ist.

Besonders vorteilhaft können zu verarbeitende Erzeugnisse somit problemlos gegriffen und beispielsweise an einen zweiten Verbraucher und/oder an einen Teil eines zweiten Verbrauchers einer zweiten Transporteinheit und/oder eine Prozessstation übergeben werden. Besonders vorteilhaft ist dabei, dass Prozessabläufe automatisiert und/oder beschleunigt werden können.

Alternativ oder zusätzlich kann vorgesehen sein, dass das motorisch angetriebene Teil eine bewegbare Behältnisaufnahme ist.

Die Behältnisaufnahme kann dabei beispielsweise zur Aufnahme von pharmazeutischen Behältnissen, beispielsweise Behältnisse, die mit einem medizinischen Wirkstoff befüllt werden, dienen. Besonders vorteilhaft ist durch die bewegbare Behältnisaufnahme, dass die Behältnisse beispielsweise geschwenkt, umgefüllt und/oder präzise gesteuert werden können. Beispielsweise kann ebenfalls vorteilhafterweise vorgesehen sein, dass ein Behältnis mittels der bewegbaren Behältnisaufnahme der oder einer Prozessstation, beispielsweise einer Füllvorrichtung und/oder dem oder einem zweiten Verbraucher und/oder einem Teil des zweiten Verbrauchers der oder einer zweiten Transporteinheit angenähert werden kann, wodurch wiederum ein erleichtertes Prozessieren und/oder (Weiter)-Verarbeiten des Behältnisses ermöglicht werden kann.

Bei einer weiteren vorteilhaften Ausgestaltung der Erfindung kann vorgesehen sein, dass der Verbraucher und/oder ein Teil des Verbrauchers eine Partikelauswertevorrichtung und/oder ein Luftkeimsammler ist.

Eine Partikelauswertevorrichtung kann dabei beispielsweise zur Auswertung, Bewertung, Zählung und/oder Analyse von Partikeln und/oder partikelähnlicher Verunreinigungen ausgebildet sein.

Der Luftkeimsammler bzw. dessen Nährmedium und/oder die Partikelauswertevorrichtung kann vorteilhafterweise beispielsweise dazu verwendet werden, mikrobiologische Verunreinigungen innerhalb einer oder der, vorzugsweise der weiter unten beschriebenen kontrollierten Umgebung, zu überwachen und einen Prozess frühzeitig zu stoppen und/oder einen Prozess im Nachgang zu beurteilen. Dies ist insbesondere dann von Bedeutung, wenn beispielsweise pharmazeutische Behältnisse verarbeitet und/oder prozessiert werden.

Hierbei kann beispielsweise vorgesehen sein, dass wenigstens eine weitere Transporteinheit wenigstens ein Merkmal oder eine Kombination mehrerer bereits beanspruchter Merkmale erfüllt, während die hierin beanspruchte Transporteinheit über die Partikelauswertevorrichtung die Anzahl partikulärer Verunreinigungen in der Nähe der weiteren Transporteinheit(en) überwacht.

Alternativ oder zusätzlich kann vorgesehen sein, dass der Verbraucher und/oder ein Teil des Verbrauchers ein Dekontaminationssystem ist.

Ein Dekontaminationssystem kann dabei beispielsweise dazu Ausgebildet sein, kontrollierte Umgebungen, beispielsweise einen Isolator, insbesondere vor der Durchführung eines innerhalb der kontrollierten Umgebung durchzuführenden Prozesses, zu dekontaminieren. Somit kann vorteilhafterweise sichergestellt werden, dass die kontrollierte Umgebung zu Beginn des oder eines durchzuführenden Prozesses möglichst frei von insbesondere mikrobiologischen Verunreinigungen ist. Alternativ oder zusätzlich kann vorgesehen sein, aktive Substanzen innerhalb der kontrollierten Umgebung nach der Durchführung eines Prozesses, in der beispielsweise toxische Erzeugnisse verarbeitet beziehungsweise prozessiert wurden, durch das Dekontaminationssystem zu inaktivieren.

Eine weitere vorteilhafte Ausgestaltung der Erfindung kann vorsehen, dass der Verbraucher und/oder ein Teil des Verbrauchers eine antreibbare Hubvorrichtung ist.

Dabei kann beispielsweise vorgesehen sein, dass die Hubvorrichtung auf der Transporteinheit ausgebildet ist und unabhängig von einer Bewegung der Transporteinheit beispielsweise dazu ausgebildet ist, vertikale Bewegungen auszuführen. Besonders vorteilhaft kann somit beispielsweise eine Prozessstation mit einem weiteren Verbraucher und/oder mit einem Teil des weiteren Verbrauchers angefahren werden, die oberhalb der Transporteinheit ausgebildet ist. Eine Hubbewegung kann dabei beispielsweise über einen Linearantrieb, über ausfahrbare Zylinder, und/oder über synchronisierte Drehbewegungen, beispielsweise zum Ausfahren von zwei Kniegelenken der Hubvorrichtung, realisiert werden.

Insbesondere kann die antreibbare Hubvorrichtung zum Anfahren eines Verschlusselements, vorzugsweise eines Stopfens, eines Plungers, einer Kappe und/oder eines Verschlussdeckels ausgebildet sein, vorzugsweise mit einem auf der Hubvorrichtung befindlichen Behältnis.

Dabei kann beispielsweise vorgesehen sein, dass das Behältnis insbesondere ein pharmazeutisches Behältnis, beispielsweise das bereits erwähnte pharmazeutische Behältnis, ist und dass die Hubvorrichtung derart verfahren wird, dass das Behältnis mit dem Verschlusselement verschlossen werden kann.

Besonders vorteilhaft ist dabei, dass somit beispielsweise eine Anpresskraft des Behältnisses über die antreibbare Hubvorrichtung eingestellt werden kann.

Das Verschlusselement, insbesondere der Stopfen, kann dabei beispielsweise dazu dienen, das Behältnis vorzugsweise luftdicht zu verschließen, wodurch wiederum vorteilhafterweise erreicht werden kann, dass das beispielsweise innerhalb des Behältnisses befindliche Fluid nicht mehr von der umgebenden Luft kontaminiert werden kann.

Alternativ oder zusätzlich kann die antreibbare Hubvorrichtung insbesondere zum Anfahren einer Füllvorrichtung, insbesondere einer Füllnadel, ausgebildet sein, vorzugsweise mit dem oder einem auf der Hubvorrichtung befindlichen Behältnis.

Die Füllvorrichtung, insbesondere die Füllnadel, kann dabei beispielsweise dazu ausgebildet sein, das Behältnis mit einer Flüssigkeit, beispielsweise einem fluiden pharmazeutischen Erzeugnis, zu befüllen. Auch die Befüllung und/oder Spülung des Behältnisses mittels einem Gas, beispielsweise mit einem Gas, welches nicht mit der Füllflüssigkeit in dem Behältnis reagiert, beispielsweise mittels Stickstoff, ist möglich, um vorzugsweise zu verhindern, dass Sauerstoff und/oder ein anderes unerwünschtes Gas in dem Behältnis verbleibt, das Behältnis wird also gespült. Besonders vorteilhaft kann sein, wenn das Behältnis nach dem Befüllen mit dem oder einem Verschlusselement, beispielsweise dem bereits beschriebenen und/oder beanspruchten Verschlusselement, verschlossen wird. Eine weitere Möglichkeit kann ferner darin liegen, dass das Behältnis vor dem Befüllen mit dem oder einem Stopfen verschlossen wird und dass die Füllnadel zum Befüllen durch den Stopfen hindurchgeführt wird, um eine Kontamination der Flüssigkeit größtenteils zu verhindern.

Besonders vorteilhaft kann ferner sein, wenn mittels der Hubvorrichtung, insbesondere nach dem Befüllen des Behältnisses, der Verschlussdeckel angefahren wird, um das Behältnis beispielsweise über eine Verschließvorrichtung vollends zu verschließen. Die Verschließvorrichtung kann dabei beispielsweise eine bewegbare Crimpingscheibe und/oder Crimpingvorrichtung, die beispielsweise als Teil der oder einer Prozessstation und/oder als Verbraucher und/oder einem Teil des Verbrauchers einer weiteren Transporteinheit ausgebildet ist, sein.

Mit einer Crimpingscheibe und/oder einer Crimpingvorrichtung kann beispielsweise ein Verschlussdeckel, welcher beispielsweise auf einem Behälter aufgelegt ist, über eine Kontaktierung umgebördelt und der Behälter somit verschlossen werden.

Alternativ oder zusätzlich kann vorgesehen sein, dass der Verbraucher und/oder ein Teil des Verbrauchers eine, vorzugsweise bewegbare, Aufnahme für ein Nährmediumsträger, in dem vorzugsweise ein Nährmedium präsentierbar ist, ist.

Vorteilhaft ist dabei, dass der Nährmediumsträger, in dem vorzugsweise das Nährmedium präsentierbar ist, beispielsweise zusätzlich zu der oder einer Partikelauswertevorrichtung, beispielsweise der bereits beschriebenen und/oder beanspruchten Partikelauswertevorrichtung und/oder dem oder einem Luftkeimsammler , zur Überwachung auf, insbesondere mikrobiologische, Verunreinigungen innerhalb der oder einer kontrollierten Umgebung verwendet werden kann.

Alternativ oder zusätzlich kann vorgesehen sein, dass die Transporteinheit mit einem vorzugsweise abgedichteten Gehäuse ausgebildet ist.

Dabei kann beispielsweise vorteilhafterweise erreicht werden und/oder vorgesehen sein, dass durch das Gehäuse wenigstens eine Empfangsspule der magnetisch levitierbaren Transporteinheit vor Verunreinigungen geschützt wird und/oder dass die kontrollierte Umgebung vor dem Austreten von Verunreinigungen aus der Empfangsspule geschützt ist. Somit kann vorteilhafterweise erreicht werden, dass die kontrollierte Umgebung insbesondere vor Verunreinigungen von außerhalb der kontrollierten Umgebung geschützt werden kann. Ferner kann über das Gehäuse auch verhindert werden, dass beispielsweise Wasserstoffperoxid (H2O2), welches insbesondere zum Dekontaminieren der kontrollierten Umgebung verwendet werden kann, in das Innere, insbesondere zur Empfangsspule der Transporteinheit gelangt.

Beispielsweise kann vorgesehen sein, dass das Gehäuse vorzugsweise nach Richtlinien des "Hygienic Design" konstruiert wird. Als "Hygienic Design" kann dabei beispielsweise die reinigungsgerechte Gestaltung von Bauteilen, Komponenten und/oder Produktionsanlagen verstanden werden. Ferner kann vorzugsweise vorgesehen sein, dass das Material des Gehäuses beispielsweise Anforderungen an die Dekontaminierbarkeit erfüllt und mechanischen und/oder chemischen Belastungen standhält.

Ferner kann beispielsweise vorgesehen sein, dass die Transporteinheit über das Gehäuse insbesondere gasdicht abgedichtet werden kann. Weiterhin kann beispielsweise vorgesehen sein, dass zur Kategorisierung der Dichtigkeit des Gehäuses die IP-Schutzartklassen, beispielsweise nach DIN EN 60529, herangezogen werden.

Überaus vorteilhaft kann somit, wie bereits beschrieben, verhindert werden, dass die oder eine Sendespule der Transporteinheit verunreinigt wird und dass hierdurch beispielsweise auch eine Reduktion durchzuführender Dekontaminationszyklen erreicht werden kann.

Bei einer weiteren vorteilhaften Ausgestaltung der Erfindung kann vorgesehen sein, dass die Transporteinheit in einer kontrollierten Umgebung, insbesondere einem Isolator und/oder einem RABS, ausgebildet ist.

Die kontrollierte Umgebung kann beispielsweise ein Reinraum, ein Isolator, ein RABS und/oder allgemein eine Umgebung sein, in der kontaminationskritische Erzeugnisse verarbeitet beziehungsweise prozessiert werden und/oder die sich dadurch kennzeichnet, dass die Anzahl luftgetragener Teilchen sehr geringgehalten wird.

Isolatoren und RABS ("Restricted-access barrier system") werden beispielsweise in der pharmazeutischen Industrie zur Herstellung beziehungsweise keimfreien Produktion pharmazeutischer Erzeugnisse verwendet.

Besonders vorteilhaft können mit der Transporteinheit somit pharmazeutische Erzeugnisse transportiert und mit dessen Verbraucher und/oder einem Teil des Verbrauchers verarbeitet, beziehungsweise prozessiert, werden.

Ferner ist vorteilhaft, dass mit der Transporteinheit gemäß den bereits aufgeführten Vorteilen beispielsweise automatisierte Prozessabläufe, beziehungsweise Produktionsabläufe, innerhalb der kontrollierten Umgebung durchgeführt werden können.

Alternativ oder zusätzlich sind erfindungsgemäß die Merkmale des Anspruchs 7 vorgesehen. Insbesondere wird somit zur Lösung der genannten Aufgabe bei der oder einer magnetisch levitierbaren Transporteinheit der eingangs beschriebenen Art erfindungsgemäß vorgeschlagen, dass die Transporteinheit durch Mittel zur Synchronisation eines Funktionsablaufs des Verbrauchers und/oder einem Teil des Verbrauchers mit einem Bewegungsablauf der Transporteinheit und/oder einer Prozessstation gekennzeichnet ist.

Die Mittel zur Synchronisation können dabei beispielsweise zwischen Transporteinheit und Verbraucher und/oder dem Teil des Verbrauchers, zwischen der Antriebsfläche und dem Verbraucher und/oder dem Teil des Verbrauchers und/oder der Transporteinheit, zwischen der Transporteinheit und einer weiteren Transporteinheit und/oder zwischen dem Verbraucher und/oder einem Teil des Verbrauchers und/oder der Transporteinheit und einem weiteren Verbraucher und/oder einem Teil des Verbrauchers, beispielsweise einem weiteren Verbraucher und/oder einem Teil eines weiteren Verbrauchers der oder einer weiteren Transporteinheit und/oder einer Prozessstation gebildet sein.

Als Synchronisation kann dabei beispielsweise verstanden werden, dass der Funktionsablauf des Verbrauchers und/oder einem Teil des Verbrauchers genau auf den Bewegungsablauf der Transporteinheit und/oder der Prozessstation abgestimmt und/oder abstimmbar ist. Besonders vorteilhaft können somit automatisierte, kontrollierte, effiziente und/oder präzise Prozessabläufe, insbesondere innerhalb der oder einer kontrollierten Umgebung, vorzugsweise der bereits beschriebenen und beanspruchten kontrollierten Umgebung, generiert werden.

Der Bewegungsablauf der Transporteinheit kann dabei beispielsweise durch bereits beschriebene Bewegungen der Transporteinheit gekennzeichnet sein.

Insbesondere sind die Mittel zur zeitlichen und/oder örtlichen Synchronisation des Funktionsablaufs des Verbrauchers und/oder einem Teil des Verbrauchers mit dem Bewegungsablauf der Transporteinheit ausgebildet.

Somit kann beispielsweise vorteilhafterweise bestimmt werden, zu welcher Zeit sich die Transporteinheit und/oder der Verbraucher und/oder ein Teil des Verbrauchers an welcher Stelle der Antriebsfläche befindet. Ferner kann beispielsweise bestimmt werden, an welcher Stelle sich der Verbraucher und/oder ein Teil des Verbrauchers in Bezug auf eine Position der Transporteinheit auf der Antriebsfläche befindet.

Der Funktionsablauf kann dabei beispielsweise eine von dem Verbraucher und/oder einem Teil des Verbrauchers durchzuführende Aktion sein. Der Verbraucher und/oder ein Teil des Verbrauchers kann dabei beispielsweise von den bereits beschriebenen und/oder beanspruchten Komponenten gebildet sein.

Bei der Prozessstation kann es sich beispielsweise um die weiter unten näher spezifizierte Prozessstation handeln.

Bei einer weiteren vorteilhaften Ausgestaltung der Erfindung kann vorgesehen sein, dass die Mittel wenigstens eine Kommunikationsschnittstelle umfassen.

Die Kommunikationsschnittstelle kann dabei beispielsweise von der bereits beschriebenen und beanspruchten Kommunikationsschnittstelle gebildet sein. Besonders vorteilhaft können somit beispielsweise die bereits beschrieben Vorteile realisiert werden.

Alternativ oder zusätzlich kann vorgesehen sein, dass die Mittel wenigstens ein Zeitmessmittel umfassen.

Besonders vorteilhaft kann somit beispielsweise genaustens bestimmt werden, zu welcher Zeit der Funktionsablauf des Verbrauchers und/oder einem Teil des Verbrauchers beginnen und/oder enden soll, beispielsweise sobald sich die Transporteinheit über eine vorbestimmte Zeit auf der Antriebsfläche bewegt hat. Das Zeitmessmittel kann dabei beispielsweise dazu ausgebildet sein, die Zeit des Funktionsablaufs des Verbrauchers und/oder einem Teil des Verbrauchers und/oder die Zeit des Bewegungsablaufs der Transporteinheit zu bestimmen. Besonders vorteilhaft kann der Funktionsablauf des Verbrauchers und/oder einem Teil des Verbrauchers somit auf den Bewegungsablauf der Transporteinheit abgestimmt werden.

Alternativ oder zusätzlich kann vorgesehen sein, dass die Mittel wenigstens ein Positionsmessmittel umfassen.

Besonders vorteilhaft kann somit beispielsweise die Position des Verbrauchers in Bezug auf die Position der Transporteinheit bestimmt und/oder darauf abgestimmt werden. Ferner kann beispielsweise die Position (insbesondere eine Stellposition) des Verbrauchers und/oder ein Teil des Verbrauchers (bspw. eines durch den Verbraucher angetriebenen Elements) und/oder die Position der Transporteinheit in Bezug auf die Antriebsfläche bestimmt werden. Auch kann vorteilhafterweise vorgesehen sein, dass die Position des Verbrauchers und/oder der Transporteinheit in Bezug auf eine Position eines weiteren Verbrauchers, beispielsweise einer Prozessstation und/oder einer weiteren Transporteinheit, bestimmt werden kann. Vorteilhaft kann somit beispielsweise auch verhindert werden, dass die Transporteinheit mit einer weiteren Transporteinheit und/oder einem weiteren Verbraucher kollidiert.

Der Verbraucher kann beispielsweise wenigstens zwei Teile aufweisen, nämlich einen Motor und eine motorisch angetriebene Funktionseinheit, wie ein Greifelement, oder einen Motor und einen daran angebrachten, durch diesen bewegten Ausleger, beispielsweise mit einer daran angebrachten Aufnahme für ein Behältnis.

Überaus vorteilhaft kann dabei beispielsweise sein, wenn das bereits beschriebene Zeitmessmittel gemeinsam mit dem Positionsmessmittel verwendet wird. Somit kann beispielsweise genaustens bestimmt werden, zu welcher Zeit sich der Verbraucher , ein Teil des Verbrauchers und/oder die Transporteinheit an welcher Stelle des wenigstens einen Sektors der Antriebsfläche befindet. Ferner kann überaus vorteilhaft beispielsweise bestimmt werden, an welchen Prozessstation Zeitverluste entstehen, wodurch wiederum eine kontinuierliche Prozessverbesserung durch genaue Analyse der zeitlichen und/oder örtlichen Daten, die vorzugsweise abspeicherbar sind, des Funktionsablaufs des Verbrauchers, eines Teils des Verbrauchers und/oder des Bewegungsablaufs der Transporteinheit erfolgen kann.

Alternativ oder zusätzlich kann vorgesehen sein, dass die Mittel wenigstens ein Geschwindigkeitsmessmittel umfassen.

Besonders vorteilhaft kann somit die Geschwindigkeit des Funktionsablaufs des Verbrauchers, einem Teil des Verbrauchers und/oder der Transporteinheit gemessen, angepasst und aufeinander abgestimmt werden, sodass eine präzise, gesteuerte und kontrollierbare Bewegung der Transporteinheit, beispielsweise abgestimmt auf den Funktionsablauf des Verbrauchs oder umgekehrt, erfolgen kann.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der oder einer magnetisch levitierbaren Transporteinheit der eingangs beschriebenen Art erfindungsgemäß vorgeschlagen, dass von dem oder einem Verbraucher und/oder von dem oder einem Teil des Verbrauchers der Transporteinheit wenigstens eine der folgenden Aktionen ausgeführt wird:
Bewegen von einzelnen oder mehreren Erzeugnissen und/oder Nestern in wenigstens einem Freiheitsgrad, insbesondere auf verschiedene Niveaus in wenigstens einem Freiheitsgrad.

Sämtliche im Anspruch definierten Merkmale können beispielsweise von den bereits beschriebenen und/oder beanspruchten Merkmalen gebildet sein. Somit kann die Transporteinheit beispielsweise die bereits beschriebenen und/oder beanspruchten Merkmale und/oder Vorteile erfüllen.

Eine kontrollierte Umgebung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrechterhaltbar sind, beispielsweise durch eine Kontrolle eines Luftaustausches mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) oder eine konsequente Vorgabe einer Richtung des Luftaustausches (in die kontrollierte Umgebung oder aus der kontrollierten Umgebung) realisiert sein. Beispiele kontrollierter Umgebungen sind Isolatoren, Restricted Access Barrier Systems (zugangsbeschränkte Barrierensystems, insbesondere vom offenen oder geschlossenen Typ), Containments, Gloveboxes.

Ferner kann die kontrollierte Umgebung beispielsweise von einem bereits beschriebenen Reinraum, Isolator, RABS und/oder allgemein von einer Umgebung gebildet sein, die sich dadurch kennzeichnet, dass die Anzahl luftgetragener Teilchen sehr geringgehalten, ausgewertet und/oder kontrolliert wird.

Das wenigstens eine Erzeugnis kann insbesondere ein kontaminationskritisches, beispielsweise ein pharmazeutisches, Erzeugnis sein, beispielsweise ein mit einer, vorzugsweise pharmazeutischen, Flüssigkeit zu befüllendes oder befülltes Behältnis und/oder ein mit einer toxischen und/oder aktiven Substanz befülltes oder zu befüllendes Behältnis sein. Das wenigstens eine Nest kann dabei beispielsweise eine das wenigstens eine Erzeugnis aufzunehmende Komponente sein, beispielsweise eine Vorrichtung, die dazu ausgebildet ist, einzelne oder mehrere Behältnisse aufzunehmen.

Der wenigstens eine Freiheitsgrad der Bewegung des Behältnisses und/oder des Nests kann dabei beispielsweise eine Bewegung in eine x-, y-, und/oder z-Richtung sein.

Dabei kann beispielsweise vorgesehen sein, dass das Behältnis von dem Verbraucher und/oder zumindest einem Teil des Verbrauchers, beispielsweise zusätzlich oder alternativ von einem Verbraucher und/oder einem Teil eines weiteren Verbrauchers einer weiteren Transporteinheit und/oder einem Verbraucher und/oder einem Teil eines Verbrauchers einer Prozessstation, auf unterschiedliche Niveaus zum Kategorisieren der Qualität (beispielsweise "gut/schlecht", "i.O, n.i.O), beispielsweise zum Aussortieren von "schlechten" Behältnissen, auf ein unterschiedliches (Höhen-)Niveau im Vergleich zu "guten" Behältnissen angehoben wird. Somit kann beispielsweise vorteilhaft verhindert werden, dass Behältnisse, die nicht den vorbestimmten Anforderungen entsprechen, abgegeben und somit weiterverarbeitet/weiterprozessiert werden.

Alternativ oder zusätzlich kann vorgesehen sein, dass das wenigstens eine Nest und/oder einzelne Behältnisse in dem Nest von dem Verbraucher und/oder zumindest einem Teil des Verbrauchers angehoben werden. Besonders vorteilhaft können die Nester und/oder einzelne Behältnisse beispielsweise von der Transporteinheit an eine andere Transporteinheit mit einem weiteren Verbraucher, einem Teil des Verbrauchers und/oder eine Prozessstation übergeben werden.

Alternativ oder zusätzlich kann vorgesehen sein, dass das Erzeugnis, beispielsweise einzelne oder mehrere Behältnisse auf eine einheitliche (Prozessier-)Höhe von dem Verbraucher und/oder einem Teil des Verbrauchers angehoben wird. Dies kann beispielsweise auch dann erfolgen, wenn sich die anderen Erzeugnisse, beispielsweise Behältnisse, Vials und/oder Spritzen und/oder Karpulen in Form und/oder Gestalt unterscheiden und/oder variieren.

Alternativ oder zusätzlich kann vorgesehen sein, dass beispielsweise Behältnisse auf unterschiedliche Höhen zum insbesondere selektiven Abholen von Verschlusselementen, beispielsweise Caps, bewegt werden. Besonders vorteilhaft kann somit ein automatisierter Verschließprozess des wenigstens einen Behältnisses generiert werden.

Alternativ oder zusätzlich kann vorgesehen sein, dass das Behältnis in Bezug auf ein Abstandsmaß zwischen einem Flüssigkeitsniveau zu einem Nadelende, beispielsweise einem Nadelende der oder einer bereits beschriebenen und/oder beanspruchten Füllnadel, von dem Verbraucher und/oder einem Teil des Verbrauchers bewegt wird. Besonders vorteilhaft kann somit eine stetig gleiche Füllmenge des Behältnisses erreicht werden.

Alternativ oder zusätzlich kann vorgesehen sein, dass durch den Verbraucher und/oder einem Teil des Verbrauchers ein Eindrücken des oder eines Verschlusselements, beispielsweise des/der bereits beschriebenen und/oder beanspruchten Verschlusselement(e), in das Behältnis bewirkt wird. Vorstellbar kann dabei auch sein, dass der Verbraucher und/oder ein Teil des Verbrauchers der Transporteinheit beispielsweise die oder eine, beispielsweise die bereits beschriebene und/oder beanspruchte Hubvorrichtung ist, wodurch wiederum das Verschlusselement durch eine vertikale und/oder transversale Bewegung des auf der Hubvorrichtung befindlichen Behälters ein Eindrücken des Verschlusselements, beispielsweise des oder eines Stopfens, bewirkt wird. Hierbei kann beispielsweise auch vorgesehen sein, dass sich nicht nur das Behältnis, sondern zusätzlich auch das Verschlusselement, vorzugsweise der Stopfen, bewegt, beispielsweise derart, dass das Verschlusselement von einem Verbraucher und/oder zumindest einem Teil des Verbrauchers einer Prozessstation oder einer weiteren Transporteinheit aufgenommen und in eine zur Bewegung des Verbrauchers und/oder zumindest einem Teil des Verbrauchers der das Behältnis aufnehmenden Transporteinheit entgegengesetzte Richtung bewegt wird.

Eine weitere vorteilhafte Ausgestaltung kann vorsehen, dass das Behältnis von dem Verbraucher und/oder einem Teil des Verbrauchers an eine innerhalb der kontrollierten Umgebung ausgebildeten Schnittstelle derart bewegt wird, dass lediglich das Behältnis die Schnittstelle überschreitet, wobei die Transporteinheit und/oder eine das Behältnis aufnehmende Vorrichtung, beispielsweise ein Träger, die Schnittstelle gerade nicht überschreitet. Die Schnittstelle kann dabei beispielsweise zwei Bereiche innerhalb der kontrollierten Umgebung voneinander abgrenzen. Beispielsweise kann die Schnittstelle auch eine Transferschnittstelle zwischen zwei kontrollierten Umgebungen sein.

Ferner kann beispielsweise vorgesehen sein, dass das Behältnis derart bewegt wird, dass sich ein Flüssigkeitslevel einer Flüssigkeit in dem Behältnis bei einer Bewegungsänderung und/oder Richtungsänderung, insbesondere einer Beschleunigung, der Transporteinheit nicht verändert. Dies kann beispielsweise durch einen Beschleunigungsausgleich zwischen der Beschleunigung der Transporteinheit und der hierdurch bewirkten Beschleunigung des, das Behältnis aufnehmenden, Verbrauchers und/oder einem Teil des Verbrauchers erreicht werden. Besonders vorteilhaft kann somit verhindert werden, dass die Flüssigkeit durch verschiedene Bewegungsabläufe der Transporteinheit beeinflusst wird, insbesondere aus dem Behältnis austritt und/oder überschwappt.

Alternativ oder zusätzlich wird von dem oder einem Verbraucher und/oder von dem oder einem Teil des Verbrauchers der Transporteinheit erfindungsgemäß die Aktion des Heranführens des oder eines Behältnisses an eine Prozessstation ausgeführt.

Besonders vorteilhaft können somit verschiedene Verbraucher und/oder Teile des Verbrauchers der Prozessstation mit dem Verbraucher und/oder zumindest einem Teil der Transporteinheit zusammenwirken. Somit kann das Behältnis beispielsweise an eine Füllvorrichtung, die beispielsweise mit einer vorzugsweise stillstehenden Füllnadel zum Befüllen des Behältnisses mit einer Flüssigkeit und/oder einem Gas ausgebildet ist, herangeführt werden.

Alternativ oder zusätzlich kann hierbei vorgesehen sein, dass das Behältnis an die oder eine, beispielsweise die bereits beschriebene, Verschließvorrichtung zum Verschließen des Behältnisses herangeführt wird. Vorzugsweise wird hierbei eine temporäre (Press-)Verbindung zwischen dem Behältnis und dem oder einem Verschlusselement bewirkt. Somit kann auch vorgesehen sein, dass das Behältnis direkt an das oder ein Verschlusselement herangeführt wird.

Alternativ oder zusätzlich kann darüber hinaus vorgesehen sein, dass das Behältnis an einen Sensor herangeführt wird. Der Sensor kann dabei beispielsweise zur Überprüfung verschiedener Qualitätsmerkmale des Behältnisses ausgebildet sein, beispielsweise ob das Verschlusselement korrekt auf einer Öffnung des Behältnisses aufgebracht ist.

Alternativ oder zusätzlich wird von dem oder einem Verbraucher und/oder von dem oder einem Teil des Verbrauchers der Transporteinheit erfindungsgemäß die Aktion des Bewirkens einer Rotationsbewegung des oder eines Behältnisses ausgeführt.

Hierbei kann beispielsweise vorgesehen sein, dass die Rotation des Behältnisses vorteilhafterweise zur Präsentation seiner Außenseite, vorzugsweise innerhalb einer Inspektionsstation, ausgebildet ist, damit das Behältnis von allen Seiten überprüft werden kann.

Alternativ oder zusätzlich kann vorgesehen sein, dass mittels der Rotationsbewegung des Behältnisses wenigstens zwei parallel ablaufende Prozesse, beispielsweise ein Beschriften des Behältnisses auf der einen Seite und/oder Auswerten und/oder Analysieren des Behältnisses und/oder dessen Inhalts auf der jeweils anderen Seite, durchgeführt werden können. Hierdurch wird die Prozesszeit deutlich gesenkt und die Effizienz gesteigert.

Die Rotationsbewegung kann dabei vorzugsweise abgestimmt sein auf eine Bewegung der Transporteinheit, eines weiteren Verbrauchers und/oder zumindest einem Teil des Verbrauchers einer weiteren Transporteinheit und/oder einer Prozessstation.

Alternativ oder zusätzlich wird von dem oder einem Verbraucher und/oder einem Teil des Verbrauchers der Transporteinheit erfindungsgemäß die Aktion des Bewegens eines Fluids ausgeführt.

Besonders vorteilhaft können somit verschiedene Prozessabläufe, beispielsweise ein Ab- und/oder Umfüllen des Fluids von der einen Transporteinheit zu einem Verbraucher und/oder einem Teil des Verbrauchers einer weiteren Transporteinheit und/oder einer Prozessstation, durchgeführt werden.

Das Bewegen des Fluids kann hierbei insbesondere ein Rühren und/oder Pumpen des Fluids sein.

Das Rühren des Fluids kann dabei beispielsweise ein homogenes Vermischen der Flüssigkeit ermöglichen.

Das Fluid ist vorzugsweise eine Flüssigkeit und/oder ein Gas.

Die Flüssigkeit kann dabei beispielsweise eine pharmazeutische Flüssigkeit, beispielsweise ein Medikament, sein. Das Gas kann ferner beispielsweise ein Dekontaminationsgas zum Dekontaminieren der kontrollierten Umgebung sein.

Besonders vorteilhaft ist, dass somit verschiedenste Fluide von dem Verbraucher und/oder einem Teil des Verbrauchers verarbeitet, beziehungsweise prozessiert, werden können. Die Flüssigkeit und/oder das Gas kann dabei beispielsweise mittels der bereits beschriebenen Füllvorrichtung in das oder ein Behältnis gefüllt werden.

Alternativ oder zusätzlich wird von dem oder einem Verbraucher und/oder einem Teil des Verbrauchers der Transporteinheit erfindungsgemäß die Aktion des Anpassens eines gegenseitigen Abstandes von Öffnungen von zu bearbeitenden Behältnissen ausgeführt.

Besonders vorteilhaft kann somit ein gleichbleibender Prozess an einer Prozessstation erfolgen, die beispielsweise einen stationären Verbraucher und/oder ein stationäres Teil des Verbrauchers, hat. Dies kann beispielsweise bedeuten, dass die von der Transporteinheit anzufahrende Prozessstation die oder eine Verschließvorrichtung aufweist, über die die Öffnungen mit Verschließelementen versehen werden können. Hierbei kann sein, dass die Behältnisse an die Verschließelemente an jeweils vorbestimmten Positionen herangeführt werden. Damit sichergestellt werden kann, dass die Verschließelemente passgenau in die Öffnungen eingebracht werden können, muss sichergestellt werden, dass die Behältnisse einen vorbestimmten Abstand zueinander einhalten. Falls dies nicht der Fall sein sollte, ist es wiederum vorteilhaft, wenn eine Anpassung des Abstandes der Öffnungen der zu bearbeitenden Behältnisse erfolgt, damit ein problemlos prozessieren ermöglicht ist. Dies gilt beispielsweise ebenfalls für den Fall, wenn die anzufahrende Prozessstation die oder eine Füllvorrichtung ist, da nur bei einer Anpassung des gegenseitigen Abstandes der Öffnungen ein konformer Füllprozess erreicht werden kann.

Vorzugsweise geschieht dies derart, dass beispielsweise ein gleichbleibender Abstand einstellbar ist.

Besonders vorteilhaft können somit die bereits beschriebenen Vorteile erreicht werden, wie beispielsweise gleichmäßiges Füllen von Behältnissen, akkurates Aufsetzen und/oder Heranführen der Öffnungen an Verschließelemente et cetera.

Alternativ oder zusätzlich wird von dem oder einem Verbraucher und/oder von dem oder einem Teil des Verbrauchers der Transporteinheit erfindungsgemäß die Aktion des Übergebens des oder eines Behältnisses ausgeführt.

Dabei kann beispielsweise vorgesehen sein, dass der Verbraucher und/oder ein Teil des Verbrauchers das Behältnis von der Transporteinheit zu einem weiteren Verbraucher und/oder einem Teil des Verbraucherseiner weiteren Transporteinheit und/oder einer Prozessstation übergibt. Besonders vorteilhaft ist hierbei, wenn die Transporteinheit und/oder der Verbraucher und/oder zumindest ein Teil des Verbrauchers mit der weiteren Transporteinheit, dem weiteren Verbraucher, einem Teil des weiteren Verbrauchers und/oder der Prozessstation kommuniziert, sodass das Behältnis direkt weiterverarbeitet, beziehungsweise weiterprozessiert, werden kann.

Alternativ oder zusätzlich kann vorgesehen sein, dass das Behältnis an ein Beladesystem übergeben wird, wobei das Beladesystem vorzugsweise dazu ausgebildet sein kann, einen Gefriertrockner zu beladen. Der Gefriertrockner kann dabei beispielsweise vorteilhaft dazu genutzt werden, ein oder das Fluid innerhalb des Behältnisses gekühlt zu lagern und/oder aus einer Flüssigkeit einen bestimmten Flüssigkeitsanteil zu entziehen, sodass das Produkt pulverförmig wird.

Alternativ oder zusätzlich kann vorgesehen sein, dass das Behältnis an eine Waage übergeben und auf dieser abgesetzt wird. Die Waage kann dabei beispielsweise zur Messung des Gewichts des Behältnisses ausgebildet sein, wodurch wiederum vorteilhafterweise überprüft werden kann, ob das Behältnis korrekt befüllt würde.

Alternativ oder zusätzlich kann vorgesehen sein, dass das Behältnis übergeben und auf einer Fläche, einer Prozessstation und/oder einem ruhenden Element abgestellt wird.

Alternativ oder zusätzlich wird von dem oder einem Verbraucher und/oder zumindest einem Teil des Verbrauchers der Transporteinheit erfindungsgemäß die Aktion des Steuerns eines Greifelements, insbesondere eines Greifarms, ausgeführt.

Das Greifelement kann dabei beispielsweise Bestandteil des oder eines Roboters, beispielsweise der oder ein Roboterarm, sein. Besonders vorteilhaft kann das oder ein Erzeugnis, beispielsweise das oder ein Behältnis, somit problemlos gegriffen und beispielsweise übergeben werden.

Dabei kann beispielsweise auch vorgesehen sein, dass der Greifer, insbesondere der Greifarm, derart (an)gesteuert wird, dass hierdurch ein Öffnen, Schließen, Aktivieren und/oder Deaktivieren des Greifers bewirkt wird. Das Aktivieren des Greifmechanismus kann beispielsweise mittels Vakuum erfolgen.

Alternativ oder zusätzlich kann vorgesehen sein, dass der Greifer derart gesteuert wird, dass ein Greifen einer weiteren Transporteinheit und/oder eines Erzeugnisses, welches auf der weiteren Transporteinheit von einem weiteren Verbraucher und/oder einem Teil des weiteren Verbrauchers aufgenommen ist, bewirkt werden kann.

Alternativ oder zusätzlich wird von dem oder einem Verbraucher und/oder von zumindest einem Teil des Verbrauchers der Transporteinheit erfindungsgemäß die Aktion des Bewirkens einer Schraubbewegung zur Einbringung eines mit einem Gewinde versehenen Elements ausgeführt.

Besonders vorteilhaft kann somit beispielsweise erreicht werden, dass hierdurch eine form- und/oder kraftschlüssige, lösbare Verbindung des Elements mit einem entsprechenden Gegenelement erreicht werden.

Alternativ oder zusätzlich wird von dem oder einem Verbraucher und/oder von dem oder einem Teil des Verbrauchers der Transporteinheit erfindungsgemäß die Aktion des Steuerns und/oder Antreibens wenigstens einer elektrischen Funktionseinheit ausgeführt.

Besonders vorteilhaft können somit verschiedene Aktionen vom Verbraucher und/oder einem Teil des Verbrauchers durchgeführt werden, wodurch wiederum die bereits beschriebenen Vorteile erreicht werden können.

Unter elektrischer Funktionseinheit, kann, neben den bereits beschriebenen und/oder beanspruchten elektrischen Funktionseinheiten, beispielsweise eine Pumpe verstanden werden. Die Pumpe kann dabei beispielsweise derart angetrieben werden, dass Luft innerhalb der kontrollierten Umgebung bewegt wird. Dies geschieht vorzugsweise derart, dass ein aktives Sampling der Luft und/oder Verunreinigungen der Luft, beispielsweise Keimen, bewirkt wird.

Alternativ oder zusätzlich kann vorgesehen sein, dass die elektrische Funktionseinheit von einer Reinigungsvorrichtung gebildet wird, wobei die Reinigungsvorrichtung auf der Transporteinheit angetrieben wird.

Alternativ oder zusätzlich kann vorgesehen sein, dass mittels der elektrischen Funktionseinheit ein Werkzeugwechsel auf der Transporteinheit ausgeführt wird.

Als weitere, vorteilhafte Ausgestaltung kann vorgesehen sein, dass die elektrische Funktionseinheit von einer Waschdüse gebildet ist, die angetrieben und somit bewegt wird.

Alternativ oder zusätzlich kann ferner vorgesehen sein, dass die elektrische Funktionseinheit von einem Kühl- und/oder Heizsystem und/oder ein Feuchtereguliersystem gebildet ist, welches betrieben von dem Verbraucher und/oder einem Teil des Verbrauchers gesteuert und/oder angetrieben wird.

Darüber hinaus kann vorgesehen sein, dass durch das Steuern und/oder Antreiben der elektrischen Funktionseinheit eine Auswertung, eine Analyse und/oder eine Erkennung eines Identifikators, vorzugsweise eines RFID-Chips erfolgen kann.

Alternativ oder zusätzlich wird von dem oder einem Verbraucher und/oder zumindest einem Teil des Verbrauchers der Transporteinheit erfindungsgemäß die Aktion des Verschließens des oder eines Behältnisses durch Anbringung wenigstens eines Verschlusselements ausgeführt, wobei eine Schließbewegung auf der oder einer Transporteinheit erfolgt.

Das Verschlusselement kann dabei beispielsweise von dem bereits beschriebenen und/oder beanspruchten Verschlusselement gebildet sein.

Dabei kann beispielsweise vorgesehen sein, dass das Behältnis vorzugsweise mit der oder einer Hubvorrichtung an das Verschlusselement in bereits beschriebener Art und Weise herangeführt wird.

Besonders vorteilhaft kann das Behältnis somit verschlossen werden, sodass ein oder das in dem Behältnis befindliche Fluid nicht mehr kontaminiert werden kann.

Das Verschlusselement ist insbesondere ein Stopfen, eine Kappe, ein Verschlussdeckel und/oder ein Plunger.

Alternativ oder zusätzlich wird von dem oder einem Verbraucher und/oder zumindest einem Teil des Verbrauchers der Transporteinheit erfindungsgemäß die Aktion des Bewirkens einer Bewegung, insbesondere einer Rotationsbewegung, zum Abholen einer Kennzeichnung ausgeführt.

Bei der Kennzeichnung kann es sich beispielsweise um einen QR-Code und/oder einen RFID-Tag handeln.

Insbesondere aufgrund der Rotationsbewegung können hierbei beispielsweise, wie bereits beschrieben, parallel noch weitere Prozesse an dem Behältnis durchgeführt werden, wie beispielsweise ein Auswerten und/oder Analysieren des Behältnisses.

Es sei hierbei angemerkt, dass die Kombination einzelner und/oder mehrerer beschriebener Aktionen miterfasst sind.

Bei einer weiteren vorteilhaften Ausgestaltung der Erfindung kann vorgesehen sein, dass das unverarbeitete/unprozessierte Erzeugnis ein leeres Behältnis ist.

Dabei kann es sich beispielsweise um das bereits beschriebene Behältnis, vorzugsweise ein pharmazeutisches Behältnis, handeln.

Besonders vorteilhaft können hierdurch die bereits beschriebenen Vorteile erreicht werden.

Alternativ oder zusätzlich kann vorgesehen sein, dass das unverarbeitete/unprozessierte Erzeugnis ein gefülltes, nicht geprüftes Behältnis ist.

Unter dem gefüllten, nicht geprüften Behältnis kann beispielsweise das oder ein Behältnis, beispielsweise das bereits beschriebene Behältnis, verstanden werden, welches zwar bereits mit dem oder einem Fluid befüllt, die Füllmenge oder weitere Qualitätsmerkmale jedoch noch nicht überprüft wurden.

Besonders vorteilhaft kann das gefüllte, nicht geprüfte Behältnis anschließend über wenigstens eine beschriebene und von dem Verbraucher und/oder einem Teil des Verbrauchers durchgeführten Aktion verarbeitet, beziehungsweise prozessiert, werden.

Alternativ oder zusätzlich kann vorgesehen sein, dass das unverarbeitete/unprozessierte Erzeugnis ein gefülltes, unverschlossenes Behältnis ist.

Im Unterschied zum gefüllten, geprüften Behältnis kann hierbei vorgesehen sein, dass das Behältnis, beispielsweise das bereits beschriebene Behältnis, zunächst befüllt, vorzugsweise mit dem oder einem Fluid befüllt, jedoch noch nicht mit dem oder einem Verschlusselement verschlossen wurde.

Besonders vorteilhaft kann von dem Verbraucher und/oder einem Teil des Verbrauchers hierbei wenigstens eine bereits beschriebene Aktion durchgeführt werden, beispielsweise das Anfahren einer das oder ein Verschlusselement bereitstellenden Verschlussstation.

Alternativ oder zusätzlich kann vorgesehen sein, dass das unverarbeitete/unprozessierte Erzeugnis ein gefülltes, verschlossenes Behältnis ist.

Auch hierbei kann es sich bei dem Behältnis um das bereits beschriebene Behältnis handeln, wobei das Behältnis bereits mit dem oder einem Fluid befüllt und mittels dem oder einem Verschlusselement verschlossen wurde. Anschließend können von dem Verbraucher und/oder einem Teil des Verbrauchers vorteilhafterweise verschiedene weitere, bereits beschriebene Aktionen an dem Behältnis durchgeführt werden, wie beispielsweise das Etikettieren, das Überprüfen, ob das Verschlusselement korrekt aufgebracht und das Behältnis korrekt verschlossen ist et cetera.

Eine weitere vorteilhafte Ausgestaltung der Erfindung kann vorsehen, dass das verarbeitete/prozessierte Erzeugnis ein befülltes Behältnis ist.

Bei dem Behältnis kann es sich beispielsweise um das bereits beschriebene Behältnis handeln, welches mit dem oder einem Fluid befüllt wurde. Hierbei kann vorgesehen sein, dass das befüllte Behältnis beispielsweise an einen weiteren Verbraucher und/oder einem Teil des weiteren Verbrauchers, beispielsweise einer weiteren Transporteinheit und/oder einer Prozessstation übergeben wird, wodurch bereits beschriebene Vorteile realisiert werden können.

Alternativ oder zusätzlich kann vorgesehen sein, dass das verarbeitete/prozessierte Erzeugnis ein befülltes, geprüftes Behältnis ist.

Als befülltes, geprüftes Behältnis kann beispielsweise das oder ein Behältnis verstanden werden, welches bereits mit dem oder einem Fluid befüllt und verschiedene Qualitätsmerkmale, beispielsweise die Füllmenge, bereits überprüft wurde. Hierbei kann vorgesehen sein, dass das Behältnis beispielsweise an einen weiteren Verbraucher und/oder ein Teil des weiteren Verbrauchers, beispielsweise einer weiteren Transporteinheit und/oder einer Prozessstation übergeben wird, wodurch bereits beschriebene Vorteile realisiert werden können.

Alternativ oder zusätzlich kann vorgesehen sein, dass das verarbeitete/prozessierte Erzeugnis ein befülltes, verschlossenes Behältnis ist.

Wie bereits beschrieben, kann das Behältnis von dem bereits beschriebenen Behältnis gebildet sein, welches mit dem oder einem Fluid befüllt und auf welchem bereits das oder ein Verschlusselement aufgebracht ist. Hierbei kann vorgesehen sein, dass das Behältnis beispielsweise an einen weiteren Verbraucher und/oder ein Teil des weiteren Verbrauchers, beispielsweise einer weiteren Transporteinheit und/oder einer Prozessstation übergeben wird, wodurch bereits beschriebene Vorteile realisiert werden können.

Bei einer weiteren vorteilhaften Ausgestaltung der Erfindung kann vorgesehen sein, dass das unverarbeitete/unprozessierte Erzeugnis eine teilmontierte Vorrichtung, vorzugsweise aus dem medizinischen Bereich, ist.

Als teilmontierte Vorrichtung kann beispielsweise jede Vorrichtung verstanden werden, die in ihrer Gesamtheit noch nicht als funktionsfähige Einheit fungiert, da es des Zusatzes wenigstens einer zusätzlichen Komponente und/oder wenigstens eines zusätzlichen Prozessschrittes bedarf, die zur Funktionsfähigkeit der teilmontierten Vorrichtung elementar beiträgt. Dies kann beispielsweise durch das bereits beschriebene und/oder beanspruchte, unverarbeitete, beziehungsweise unprozessierte, Behältnis gebildet sein.

Besonders vorteilhaft ist die teilmontierte Vorrichtung aus dem medizinischen, beispielsweise pharmazeutischen, Bereich, wodurch sich bereits beschriebene Vorteile erreichen lassen. Dies könnten beispielsweise Injektoren, vorzugsweise Autoinjektionssysteme sein.

Bei einer weiteren vorteilhaften Ausgestaltung der Erfindung kann vorgesehen sein, dass das verarbeitete/prozessierte Erzeugnis eine montierte Vorrichtung, vorzugsweise aus dem medizinischen Bereich, ist.

Als montierte Vorrichtung kann jede Vorrichtung verstanden werden, die in ihrer Gesamtheit vorbestimmte Funktionsmerkmale erfüllt. Dies kann beispielsweise durch das bereits beschriebene und/oder beanspruchte, verarbeitete, beziehungsweise prozessierte, Behältnis gebildet sein. Besonders vorteilhaft ist die montierte Vorrichtung aus dem medizinischen, beispielsweise pharmazeutischen, Bereich, wodurch sich bereits beschriebene Vorteile erreichen lassen.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt, in jeweils stark vereinfachter Darstellung,
- Fig. 1: eine zweidimensionale, schematische Darstellung einer erfindungsgemäßen, magnetisch levitierbaren Transporteinheit mit einem Verbraucher und einer Kommunikationsschnittstelle,
- Fig. 2: eine weitere, zweidimensionale, schematische Darstellung der oder einer erfindungsgemäßen, magnetisch levitierbaren Transporteinheit zur Bewegung in unterschiedlichen Freiheitsgraden, und einem Verbraucher zur Bewegung in unterschiedliche Freiheitsgrade
- Fig. 3: eine weitere, zweidimensionale, schematische Darstellung eines als Teil eines Verbrauchers ausgebildeten Roboter(arm) mit Greifelement,
- Fig. 4: eine weitere, zweidimensionale, schematische Darstellung einer erfindungsgemäßen, magnetisch levitierbaren Transporteinheit mit einem als Hubvorrichtung ausgebildeten Verbraucher,
- Fig. 5: eine weitere, zweidimensionale, schematische Darstellung einer erfindungsgemäßen, magnetisch levitierbaren Transporteinheit mit einem als antreibbare Hubvorrichtung ausgebildeten Verbraucher, wobei auf der Hubvorrichtung ein Behältnis platziert ist,
- Fig. 6: eine weitere, zweidimensionale, schematische Darstellung einer erfindungsgemäßen, magnetisch levitierbaren Transporteinheit mit einem als antreibbare Hubvorrichtung ausgebildeten Verbraucher, wobei auf der Hubvorrichtung ein Behältnis platziert ist, wobei ein Verschlusselement angefahren wird,
- Fig. 7: eine weitere, zweidimensionale, schematische Darstellung einer erfindungsgemäßen, magnetisch levitierbaren Transporteinheit mit einem als antreibbare Hubvorrichtung ausgebildeten Verbraucher, wobei auf der Hubvorrichtung ein Behältnis platziert ist, wobei eine Füllnadel angefahren wird,
- Fig. 8: eine weitere, zweidimensionale, schematische Darstellung einer erfindungsgemäßen, magnetisch levitierbaren Transporteinheit, wobei der Verbraucher mit einer Aufnahme für ein Nährmediumsträger, in dem ein Nährmedium präsentiert ist, ausgebildet ist,
- Fig. 9: eine weitere, zweidimensionale, schematische Darstellung einer erfindungsgemäßen, magnetisch levitierbaren Transporteinheit mit einem als Partikelauswertevorrichtung ausgebildeten Verbraucher,
- Fig. 10: eine weitere, zweidimensionale, schematische Darstellung einer erfindungsgemäßen, magnetisch levitierbaren Transporteinheit mit einem als Dekontaminationssystem ausgebildeten Verbraucher,
- Fig. 11: eine weitere, zweidimensionale, schematische Darstellung einer erfindungsgemäßen, magnetisch levitierbaren Transporteinheit, wobei die Transporteinheit und/oder der Verbraucher mit einem abgedichteten Gehäuse ausgebildet ist.
- Fig. 12: eine weitere, zweidimensionale, schematische Darstellung zweier erfindungsgemäßen, magnetisch levitierbaren Transporteinheiten in einer kontrollierten Umgebung,
- Fig. 13: eine weitere, zweidimensionale, schematische Darstellung einer erfindungsgemäßen, magnetisch levitierbaren Transporteinheit innerhalb einer kontrollierten Umgebung, wobei von dem Verbraucher verschiedene Aktionen an einem Erzeugnis und von der Transporteinheit Bewegungsabläufe ausgeführt werden,
- Fig. 14: eine weitere, zweidimensionale, schematische Darstellung einer erfindungsgemäßen, magnetisch levitierbaren Transporteinheit, wobei einzelne und mehrere Erzeugnisse in einem Nest in wenigstens einem Freiheitsgrad von dem Verbraucher bewegt werden,
- Fig. 15: eine weitere, zweidimensionale, schematische Darstellung einer erfindungsgemäßen, magnetisch levitierbaren Transporteinheit, wobei Behältnisse von einem Teil des Verbrauchersin wenigstens einem Freiheitsgrad bewegt werden,
- Fig. 16: eine weitere, zweidimensionale, schematische Darstellung einer erfindungsgemäßen, magnetisch levitierbaren Transporteinheit, wobei ein Behältnis an eine Prozessstation herangeführt wird,
- Fig. 17: eine weitere, zweidimensionale, schematische Darstellung einer erfindungsgemäßen, magnetisch levitierbaren Transporteinheit, wobei von dem Verbraucher eine Rotationsbewegung des Behältnisses bewirkt wird,
- Fig. 18: eine weitere, zweidimensionale, schematische Darstellung einer erfindungsgemäßen, magnetisch levitierbaren Transporteinheit, wobei von dem Verbraucher ein Höhenniveaueiner Behältnisaufnahme veränderbar und eine Seitwärtsbewegung durchführbar ist,
- Fig. 19: eine weitere, zweidimensionale, schematische Darstellung einer erfindungsgemäßen, magnetisch levitierbaren Transporteinheit, wobei von dem Verbraucher ein gegenseitiger Abstand von Öffnungen von Behältnissen angepasst wird,
- Fig. 20: eine weitere, zweidimensionale, schematische Darstellung einer erfindungsgemäßen, magnetisch levitierbaren Transporteinheit, wobei ein Behältnis an einen Verbraucher einer weiteren Transporteinheit übergeben wird.
- Fig. 21: eine magnetisch levitierbare Transporteinheit in Gebrauchsstellung in einer kontrollierten Umgebung aus wenigstens zwei Kammern,
- Fig. 22: zeigt eine weitere, zweidimensionale Darstellung einer erfindungsgemäßen, magnetisch levitierbaren Transporteinheit, wobei eine Verschlussstation mit schwenkbarem Greifelement auf derselben Transporteinheit wie eine bewegbare Behältnisaufnahme angeordnet ist.

Im Folgenden werden bei den einzelnen Ausführungsbeispielen funktionell und/oder konstruktiv gleichartige oder identische Bauteile und Funktionseinheiten auf gleiche oder ähnliche Weise dargestellt und/oder mit denselben Bezugszeichen beschrieben. Die Ausführungen zu einzelnen Ausführungsbeispielen sind daher auch auf weitere Ausführungsbeispiele zu lesen, sofern nicht explizite Ausführungen dort dagegen sprechen.

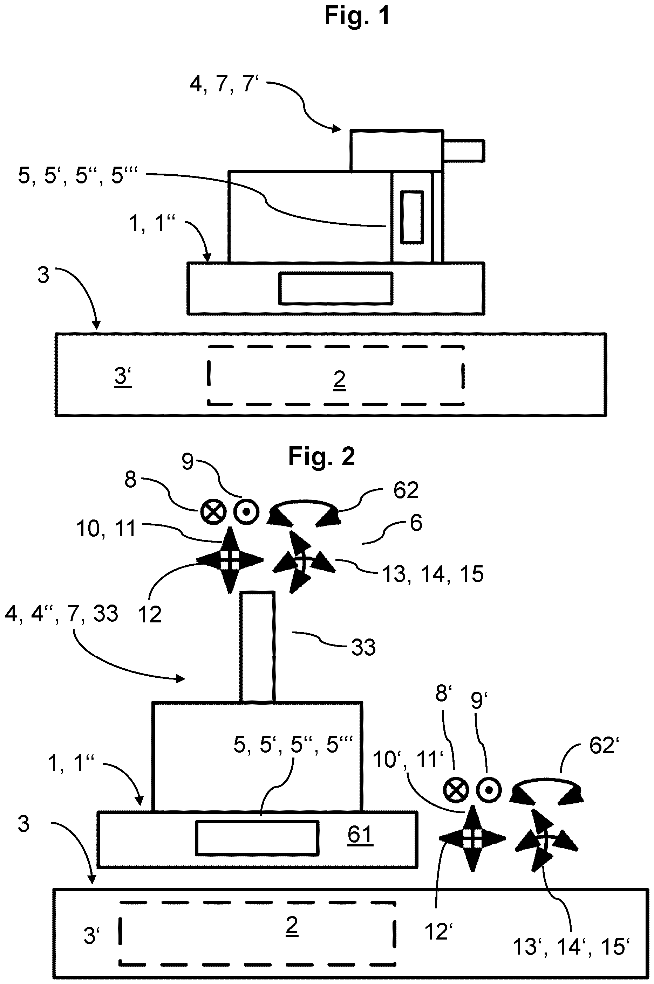

Fig. 1 zeigt eine im Ganzen mit 1 bezeichnete magnetisch levitierbare Transporteinheit, hier Mover 1", die/der auf einem Sektor 2 einer Kachel 3` über eine Antriebsfläche 3 streckenweise und/oder zeitweise mit Energie versorgbar ist. Die Transporteinheit 1 ist ferner mit einem Verbraucher 4, hier einer elektrischen Funktionseinheit 7, die als Elektromotor 7' ausgebildet ist, und mit Mitteln 5' zur zeitlichen und/oder örtlichen Synchronisation eines Funktionsablaufs desVerbrauchers 4 mit einem Bewegungsablauf der Transporteinheit 1 ausgebildet, wie auch in Fig. 2 dargestellt und nachfolgend beschrieben.

Bei den Mitteln 5` kann es sich um wenigstens eine Kommunikationsschnittstelle 5, über die der Verbraucher 4, hier der Elektromotor 7' und/oder ein Teil 4" des Verbrauchers 4, wie in den nachfolgenden Figuren näher beschrieben, berührungslos ansprechbar ist, handeln. Die Mittel 5` können zusätzlich oder alternativ ein Zeitmessmittel 5'', ein Geschwindigkeitsmessmittel 5‴ und/oder ein Positionsmessmittel 5ʺʺ umfassen.

Fig. 2 stellt die verschiedenen, möglichen Bewegungsabläufe zumindest eines Teils 4' des Verbrauchers 4 und/oder der Transporteinheit 1 dar. Der Verbraucher 4 weist hierbei zwei Teile 4" auf, nämlich die hier abdeckte motorisch angetriebene Funktionseinheit 7 und einen hierüber antreibbaren Hubkolben 33 auf.

Funktionell und/oder konstruktiv zu dem vorgehenden Ausführungsbeispiel gleichartige oder identische Bauteile und Funktionseinheiten sind mit denselben Bezugszeichen bezeichnet und nicht noch einmal gesondert beschrieben.

Ein Stellweg 6 des Verbrauchers 4, hier, wie auch in Fig. 1, die elektrische Funktionseinheit 7, kann somit, in Bezug auf die Antriebsfläche 3, durch eine Vorwärtsbewegung 8, eine Rückwärtsbewegung 9, eine Aufwärtsbewegung 10, eine Abwärtsbewegung 11, eine Seitwärtsbewegung 12 und/oder eine Rotationsbewegung 62 gekennzeichnet sein. Auch eine Vorwärtskippbewegung 13, eine Rückwärtskippbewegung 14 und/oder eine seitliche Kippbewegung 15 kann realisiert werden.

Die Transporteinheit 1, auch hier der Mover 1", kann ebenfalls eine Vorwärtsbewegung 8', eine Rückwärtsbewegung 9', eine Aufwärtsbewegung 10', eine Abwärtsbewegung 11', eine Seitwärtsbewegung 12' und/oder eine Rotationsbewegung 62' durchführen. Zusätzlich kann die Transporteinheit 1 eine Vorwärtskippbewegung 13', eine Rückwärtskippbewegung 14' und/oder eine seitliche Kippbewegung 15' durchführen.

Über die Kommunikationsschnittstelle 5 kann dabei der Stellweg 6 des Verbrauchers 4 mit dem Bewegungsablauf der Transporteinheit 1 abgestimmt und/oder synchronisiert werden. Somit ist es möglich, dass der Stellweg 6 des Verbrauchers 4 und/oder zumindest eines Teils 4" des Verbrauchers 4, beispielsweise der Stellweg des Hubkolbens 33, auf eine Position 61 der Transporteinheit 1 abstimmbar ist. Es kann hierbei auch möglich sein, dass der Stellweg 6 des Verbrauchers 4 und/oder zumindest eines Teils 4" des Verbrauchers 4, hier der Stellweg 6 des Hubkolbens 33, beispielsweisweise auf wenigstens eine der oben genannten Bewegungsrichtungen der Transporteinheit 1 abgestimmt ist.

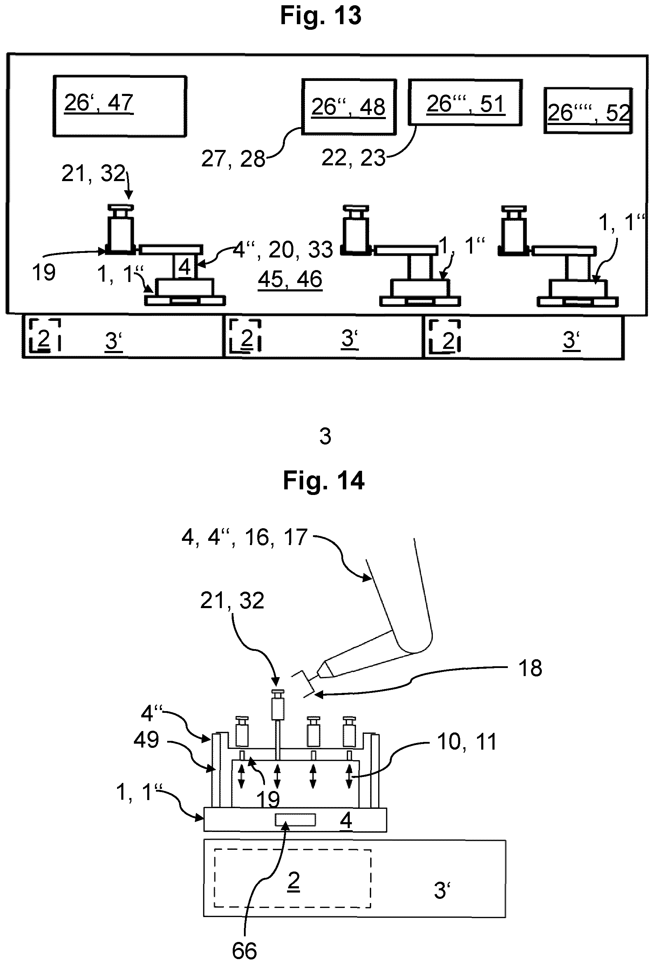

Ferner kann vorgesehen sein, dass der Stellweg 6 des Verbrauchers 4 auf eine Position 61 eines zweiten, hierin nicht gezeigten Verbrauchers 4' einer weiteren, zweiten Transporteinheit 1' und/oder einer Prozessstation 26 abgestimmt ist (siehe Fig. 13). Alternativ oder zusätzlich kann dabei ferner vorgesehen sein, dass der Stellweg 6 des Verbrauchers 4 und/oder ein Teil des Verbrauchers 4", beispielsweise der Stellweg 6 des Hubkolbens 33, auf eine Bewegungsrichtung des zweiten Verbrauchers 4' abgestimmt ist.

Allgemein kann somit gesagt werden, dass die Transporteinheit 1 berührungslos von wenigstens einem Sektor 2 der Antriebsfläche 3 mit Energie versorgbar und in wenigsten zwei, vorzugsweise wenigstens drei, Freiheitsgraden, gekennzeichnet durch die beschriebenen Bewegungsabläufe, auf dieser bewegbar ist.

Die Transporteinheit 1 ist hierbei ferner mit einer Energieeinkoppelvorrichtung 66 ausgebildet. Unter der Energieeinkoppelvorrichtung 66 kann das Element der Transporteinheit 1 verstanden werden, welches die vom Sektor 2 abgegebene Energie auf der Transporteinheit 1 aufnimmt und zur Verwendung auf der Transporteinheit 1 bereitstellt.

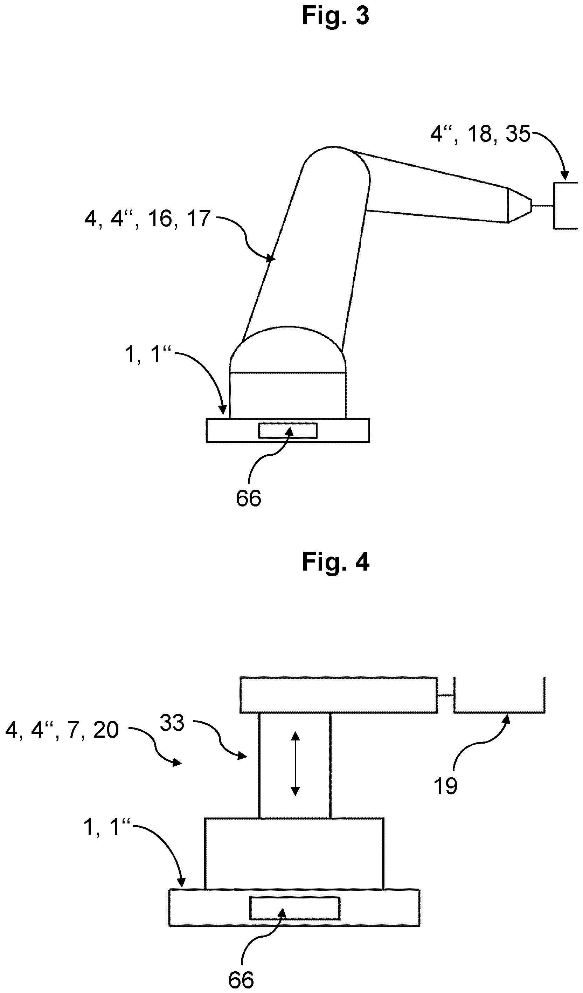

Fig. 3 zeigt mehrere Teile 4" eines Verbrauchers 4, die als motorisch angetriebenes Teil 16, in dem gezeigten Ausführungsbeispiel als Roboter 17 mit einem Greifelement 18 beziehungsweise Greifarm 35, ausgebildet sind. Dieses Greifelement 18 ist entsprechend steuerbar, sodass verschiedene, darauf basierende Prozesse von den Teilen 4" des Verbrauchers 4 durchgeführt werden können. Der Verbraucher 4 selbst kann ebenfalls beispielsweise ein die Teile 4" antreibender Elektromotor 7', wie in Fig. 1 dargestellt, sein.

Dies unterscheidet sich zu dem Ausführungsbeispiel gemäß Fig. 4, in welchem die Teile 4" des Verbrauchers 4 als bewegbare Behältnisaufnahme 19, hier als Bestandteil einer antreibbaren Hubvorrichtung 20, ausgebildet sind. Die antreibbare Hubvorrichtung 20 hat einen ein- und ausfahrbaren Hubkolben 33. Es kann somit gesagt werden, dass von dem Verbraucher 4 und/oder zumindest einem Teil 4" des Verbrauchers 4 eine elektrische Funktionseinheit 7, hier die antreibbare Hubvorrichtung 20, gesteuert und/oder angetrieben wird. Der Verbraucher 4 selbst kann wiederum ebenfalls von dem Elektromotor 7' gebildet sein, über den die Teile 4" gesteuert und angetrieben werden.

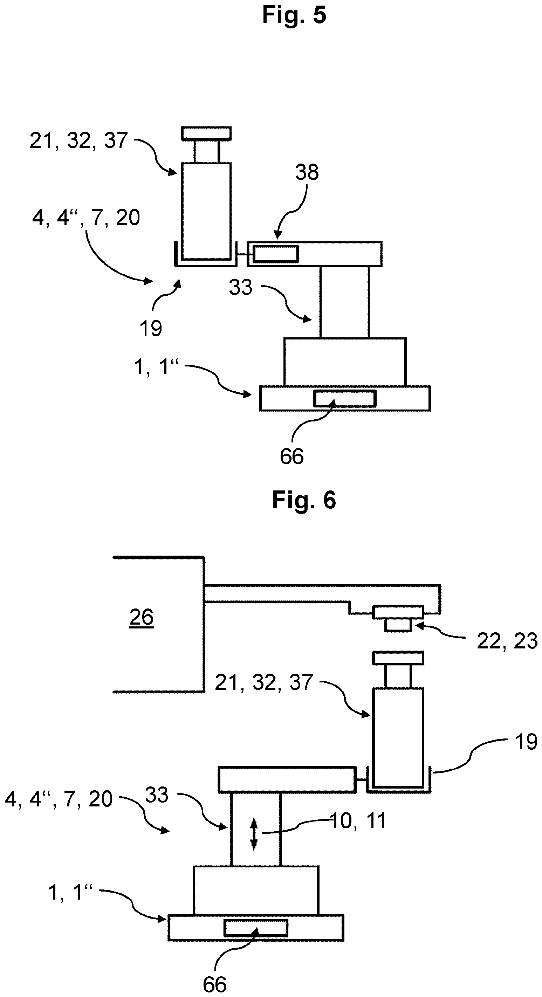

Fig. 5 zeigt im Unterschied zum Ausführungsbeispiel nach Fig. 4, ein unverarbeitetes, beziehungsweise unprozessiertes Erzeugnis 32, hier ein Behältnis 21, das auf der Behältnisaufnahme 19 abgestellt ist. Die Transporteinheit 1 kann sich hierbei unabhängig, jedoch vorzugsweise abgestimmt auf eine Bewegung der Teile 4" des Verbrauchers 4, beziehungsweise unabhängig von einer von den Teilen 4" des Verbrauchers 4 durchgeführten Aktion auf der Antriebsfläche 3 (siehe Fig. 1 und 2) bewegen. Es kann somit gesagt werden, dass die Transporteinheit 1 ein zu verarbeitendes / zu prozessierendes Erzeugnis 32 transportiert. Bei dem Behältnis 21 handelt es sich hierbei um ein (noch) unbefülltes und somit leeres und unverschlossenes Behältnis 21, weshalb gesagt werden kann, dass das unverarbeitete/unprozessierte Erzeugnis 32 ein leeres und unverschlossenes Behältnis 21 ist. Es kann somit darüber hinaus gesagt werden, dass das unverarbeitete/unprozessierte Erzeugnis 32 eine teilmontierte Vorrichtung 37, hier aus dem medizinischen Bereich, ist.

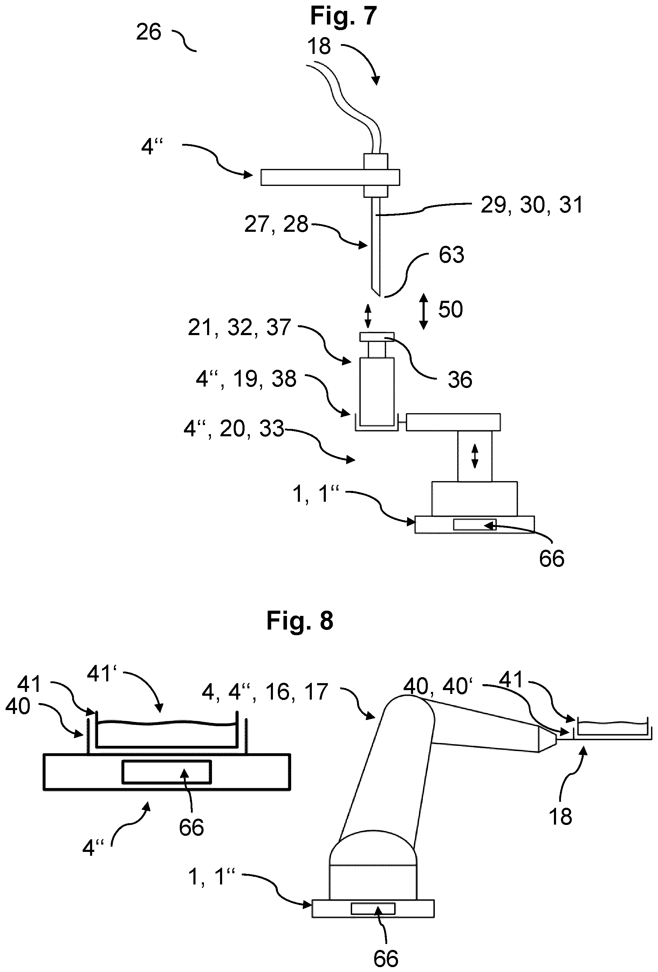

Ferner ist an einem Teil 4" des Verbrauchers 4 eine Waage 38 ausgebildet, um zu überprüfen, ob eine vorbestimmte Menge der Flüssigkeit 30 in das Behältnis 21 gefüllt wurde (vergleiche Figur 7).

Fig. 6 zeigt, im Unterschied zum vorangehenden Ausführungsbeispiel, ein oberhalb des Behältnisses 21 ausgebildetes Verschlusselement 22, hier ein Stopfen 23, welches von einer Prozessstation 26 bereitgestellt wird. Das Erzeugnis 32 ist somit ein unverschlossenes Behältnis 21. Über den Verbraucher 4, beispielsweise über die elektrische Funktionseinheit 7, insbesondere den Elektromotor 7' (Fig. 2), können auch hier verschiedene Teile 4" des Verbrauchers 4 angetrieben und/oder gesteuert werden. Somit kann über die antreibbare Hubvorrichtung 20 mit dem bewegbaren Hubkolben 33 das auf der Behältnisaufnahme 19 aufgenommene Behältnis 21 durch die Aufwärtsbewegung 10 des Hubkolbens 33, angetrieben vom Verbraucher 4, an das Verschlusselement 22 herangeführt werden, bis das Verschlusselement 22 auf dem Behältnis 21 aufgebracht ist. Es kann somit gesagt werden, dass von dem Verbraucher 4 und/oder zumindest einem Teil 4" des Verbrauchers die Aktion des Bewegens von einzelnen Behältnissen 21 in wenigstens einem Freiheitsgrad, hierbei auf verschiedene Niveaus in wenigstens einem Freiheitsgrad (Aufwärtsbewegung 10 / Abwärtsbewegung 11) des Hubkolbens 33) und die Aktion des Verschließens des Behältnisses 21 durch Anbringung wenigstens eines Verschlusselements 22, hier eines Stopfens 23, durchgeführt wird, wobei eine durch die Aufwärtsbewegung 10 des Hubkolbens 33 bewirkte Schließbewegung auf der Transporteinheit erfolgt.

In einem nicht näher gezeigten Ausführungsbeispiel wird ein Plunger 24, eine Kappe 34, ein Verschlussdeckel 25 und/oder ein Verschlussdeckel 25 angefahren.

Das Verschlusselement 22 kann dabei auch von einem weiteren, zweiten Verbraucher 4' und/oder einem Teil 4" eines zweiten Verbrauchers 4` einer weiteren, zweiten Transporteinheit 1' bereitgestellt sein. Es kann somit gesagt werden, dass von dem Verbraucher 4 und/oder zumindest einem Teil 4" des Verbrauchers 4 die Aktion des Heranführens des Behältnisses 21 an eine Prozessstation 26 ausgeführt wird.

Fig. 7 zeigt im Unterschied zum vorangegangen Ausführungsbeispiel, dass die Teile 4", die vom Verbraucher 4 angetrieben und gesteuert werden, hier ebenfalls als antreibbare Hubvorrichtung 20 mit Behältnisaufnahme 19 und Hubkolben 33 ausgebildet sind. Ferner ist ein weiteres Teil 4" eines zweiten Verbrauchers 4', hier ebenfalls ein Greifelement 18, ausgebildet, wobei mit dem Greifelement 18 eine Füllvorrichtung 27, hier eine Füllnadel 28, gehalten wird. Die antreibbare Hubvorrichtung 20, insbesondere der Hubkolben 33, mitsamt dem Behältnis 21 kann somit derart verfahren werden, dass das Behältnis 21 an die Füllnadel 28 herangeführt und mit einem innerhalb der Füllnadel 28 befindlichen Fluid 29, hier mit einer Flüssigkeit 30, insbesondere einer pharmazeutische Flüssigkeit 31, befüllt werden kann. In einem nicht näher gezeigten Ausführungsbeispiel handelt es sich bei dem Fluid um ein Gas. Dabei kann auch vorgesehen sein, dass während einem Füllvorgang des Behältnisses 21 durch Bewegen der Behältnisaufnahme 19 ein Abstand 50 zwischen Füllnadelausgang 63 und einer Flüssigkeitsebene gleichgehalten oder individuell verändert werden kann.

Alternativ kann hierbei auch vorgesehen sein, dass das auf der Behältnisaufnahme 19 befindliche Behältnis 21 von dem Hubkolben 33 auf eine bestimmte Position verfahren wird, wobei die von dem Greifelement 18 gehaltene Füllnadel 28 an das Behältnis 21, insbesondere eine Öffnung 36 des Behältnisses 21 durch Steuern des Roboters 17 mit dem Greifelement 18 herangeführt wird. In einem solchen Ausführungsbeispiel sind beide Transporteinheiten 1, 1' berührungslos mit Energie versorgt und arbeiten zumindest zeitweise miteinander.

Dabei kann auch vorgesehen sein, dass ein Teil 4" mit einem Messmittel zur Ermittlung einer Füllmenge ausgestattet ist.

Sobald das Behältnis 21 befüllt und die Füllmenge mittels geeignetem Messmittel überprüft ist, handelt es sich bei dem Erzeugnis 32 um ein gefülltes, geprüftes, jedoch unverschlossenes Behältnis 21. Wird die Füllmenge nicht überprüft, handelt es sich bei dem Erzeugnis 32 um ein befülltes, nicht geprüftes und unverschlossenes Behältnis 21.

Anschließend kann, wie in Fig. 6 gezeigt und beschrieben, von der Transporteinheit 1 die mit dem Verschlusselement 22 ausgebildete Prozessstation 26 oder das von einem zweiten Verbraucher 4 und/oder einem Teil 4" des zweiten Verbrauchers 4, beispielsweise einem auf der zweiten Transporteinheit 1' ausgebildeten Greifelement 18, bereitstellende Verschlusselement 22 angefahren werden. Sobald das Behältnis 21 verschlossen, handelt es sich um ein fertig verarbeitetes / prozessiertes Erzeugnis 32, da das Behältnis 21 befüllt, geprüft und verschlossen ist. Falls das Behältnis 21, beispielsweise die Füllmenge der Flüssigkeit 30, nicht überprüft wird, handelt es sich dennoch um ein verarbeitetes/prozessiertes Erzeugnis, da das Behältnis befüllt und verschlossen ist.

Es kann somit gesagt werden, dass sich ein verarbeitetes Erzeugnis 32 dadurch charakterisiert, dass, falls das Erzeugnis 32 von dem Behältnis gebildet ist, das Behältnis 21 befüllt und geprüft und/oder befüllt und verschlossen ist. Das Behältnis 21 bildet sodann eine montierte Vorrichtung 39 aus dem medizinischen Bereich.

Fig. 8 zeigt, in der linken Darstellung, dass ein Teil 4" des Verbrauchers 4 von einer Aufnahme 40 für ein Nährmediumsträger 41, in dem ein Nährmedium 41` präsentiert ist, gebildet ist. Die rechte Darstellung zeigt ebenfalls eine Aufnahme 40 für ein Nährmediumsträger 41, wobei die Aufnahme 40 für den Nährmediumsträger 41, in dem das Nährmedium 41` präsentiert ist, von der Aufnahme 40' des Greifelements 18 gebildet wird.

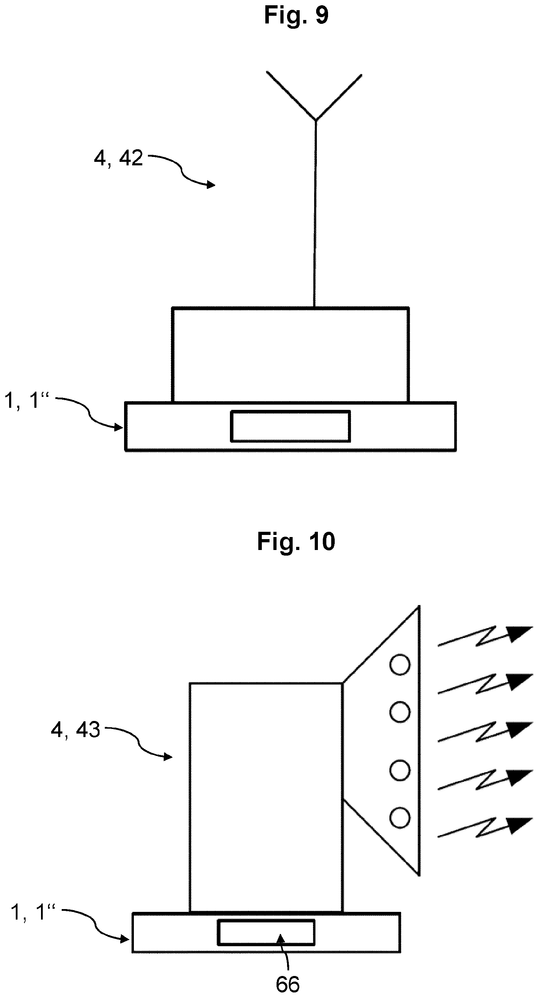

Fig. 9 zeigt einen weiteren Verbraucher 4 der Transporteinheit 1, wobei der Verbraucher 4 in diesem Ausführungsbeispiel eine Partikelauswertevorrichtung 42 ist. Fig. 10 zeigt im Unterschied zum vorangegangenen Ausführungsbeispiel, dass der Verbraucher 4 der Transporteinheit 1 ein Dekontaminationssystem 43 ist.

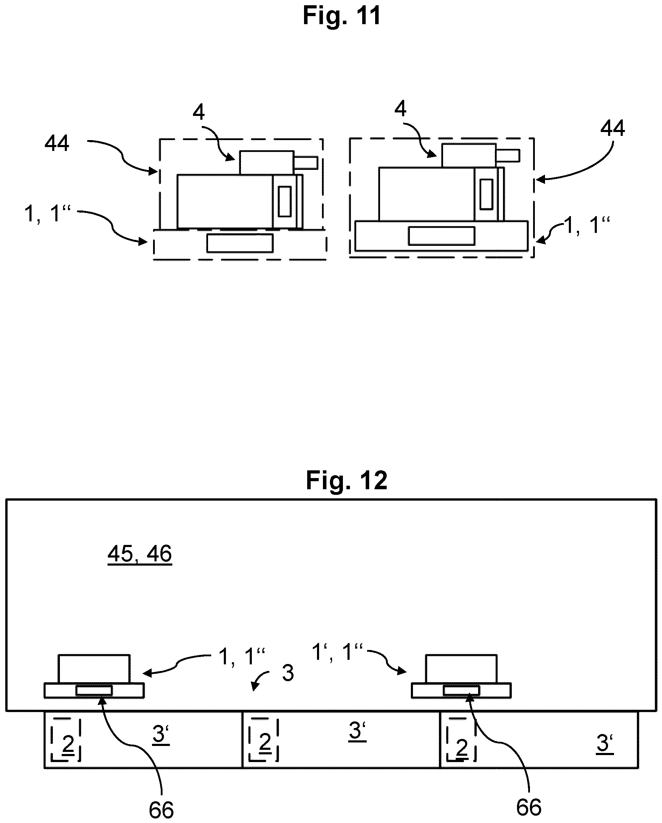

Fig. 11 stellt, rechts, ein die Transporteinheit 1 und den Verbraucher 4 umgebendes und vor Verunreinigungen schützendes, abgedichtetes Gehäuse 44 dar. In der linken Darstellung ist wiederum gezeigt, dass lediglich der Verbraucher 4 von dem Gehäuse 44 umgeben und abgedichtet ist, da der Mover 1" bereits dicht ausgeführt ist.

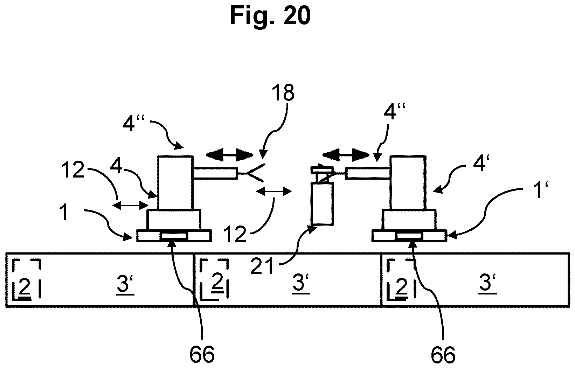

Fig. 12 zeigt mehrere Sektoren 2, hier drei Sektoren 2, der dreier Kacheln 3', die eine Antriebsfläche 3 bereitstellen, wobei zwei Transporteinheiten 1, 1` von wenigstens einem Sektor 2 der Kacheln 3` der Antriebsfläche 3 berührungslos mit Energie versorgt werden. Die Transporteinheiten 1, 1` sind hierbei in einer kontrollierten Umgebung 45, in diesem Ausführungsbeispiel einem Isolator 46, ausgebildet und können hierin in bereits beschriebener Art und Weise bewegt und insbesondere miteinander synchronisiert werden. Somit kann ein oder das Erzeugnis 32 von dem oder einem Verbraucher 4 und/oder zumindest einem Teil 4'' des Verbrauchers 4 der einen Transporteinheit 1 an den Verbraucher 4 und/oder zumindest ein Teil 4" des Verbrauchers 4 der weiteren, zweiten Transporteinheit 1` übergeben werden, wobei beide Transporteinheiten 1, 1` auch unabhängig voneinander bewegbar sind (siehe zum Beispiel Fig. 20).

Fig. 13 zeigt im Unterschied zu dem vorangegangenen Ausführungsbeispiel unterschiedliche Prozessstationen 26', 26'', 26‴ 26ʺʺ innerhalb der kontrollierten Umgebung 45, die von der Transporteinheit 1 angefahren werden.

Die Transporteinheit 1 hat, wie auch bereits in den vorangegangenen Ausführungsbeispiel, verschiedene Teile 4" eines Verbrauchers 4, hier auch wieder eine antreibbare Hubvorrichtung 20 mit Behältnisaufnahme 19, in welcher das zunächst unverarbeitete/unprozessierte Erzeugnis 32, hier das Behältnis 21, aufgenommen ist. Das Behältnis 21 ist anfangs leer, nicht geprüft und unverschlossen.

Die Transporteinheit 1, hier der Mover 1", wird von dem Sektor 2 der Antriebsfläche 3 berührungslos mit Energie versorgt und ist auf dieser Antriebsfläche 3 in bereits beschriebener Art und Weise beweglich.

Zunächst wird der Mover 1" mitsamt der darauf angeordneten antreibbaren Hubvorrichtung 20 und dem auf der Behältnisaufnahme 19 aufgenommenen Behältnis 21 zur Prozessstation 26` bewegt. Bei der Prozessstation 26' handelt es sich in diesem Ausführungsbeispiel um eine Vorbereitungsstation 47, über welche das Behältnis 21 für die nachfolgenden Prozesse vorbereitet wird.

Anschließend bewegt sich der Mover 1" zur Prozessstation 26". Bei der Prozessstation 26" handelt es sich um eine Befüllstation 48, an welcher die bereits beschriebene und beanspruchte Füllvorrichtung 27 ausgebildet ist. Die Füllvorrichtung 27 umfasst hierbei ebenfalls eine Füllnadel 28. Das Behältnis 21 wird hierbei an die Füllvorrichtung 27, beziehungsweise Füllnadel 28, herangeführt und mit einem Fluid 29, hier einer pharmazeutischen Flüssigkeit 31, befüllt, wie in Fig. 7 gezeigt. Das Heranführen geschieht in bereits beschriebener Art und Wiese, nämlich derart, dass der Hubkolben 33 der antreibbaren Hubvorrichtung 20 derart gesteuert und angetrieben wird, dass eine Aufwärtsbewegung 10 bewirkt wird.

Nach diesem Prozessschritt ist das Erzeugnis 32 ein befülltes, nicht geprüftes und unverschlossenes Behältnis 21. Wird die Füllmenge der pharmazeutischen Flüssigkeit 31 bereits mittels der Waage 38 überprüft, handelt es sich um ein geprüftes und gefülltes Behältnis 21.

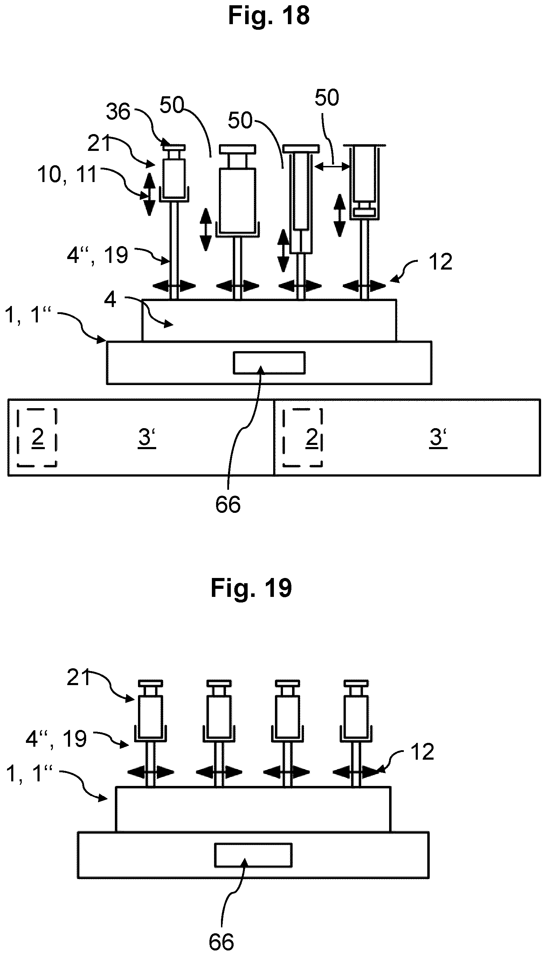

Werden, wie im Ausführungsbeispiel gemäß Fig. 19 gezeigt und beschrieben, mehrere Behältnisse 21, die beispielsweise über ein Nest 49 aufgenommen sind, befüllt, wird ein gegenseitiger Abstand 50 von Öffnungen 36 der Behältnisse 21 von dem Verbraucher 4 bereits vor dem Erreichen der Prozessstation 26 angepasst, sodass ein gleichbleibender Abstand 50 einstellbar ist (siehe 19 ohne Nest 49).

Nach dem Befüllen des Behältnisses 21 wird der Hubkolben 33 derart angetrieben und gesteuert, dass dieser eine Abwärtsbewegung 11 zur Ursprungsposition vollzieht.

Anschließend wird der Mover 1" derart bewegt, dass die Prozessstation 26‴ angefahren werden kann. Bei der Prozessstation 26‴ handelt es sich bei diesem Ausführungsbeispiel um eine Verschlussstation 51. Diese Verschlussstation 51 stellt wenigstens ein bereits beschriebenes und/oder beanspruchtes Verschlusselement 22 bereit. Das Verschlusselement 22, beispielsweise der Stopfen 23, wird hierbei in bereits beschriebener Art und Weise von dem Behältnis 21 über die antreibbare Hubvorrichtung 20 angefahren beziehungsweise wird das Behältnis 21 an das Verschlusselement 22 herangeführt. Wird das Verschlusselement 22 von der Verschlussstation 51 derart präsentiert, dass dieses beispielsweise von dem oder einem Greifelement 18 gehalten wird, kann der Hubkolben 33 mit dem Greifelement 18 zusammenwirken (nicht gezeigt).

Somit kann vorgesehen sein, dass das von dem Greifelement 18 bereitgestellte Verschlusselement 22 derart mit der Aufwärtsbewegung 10 des Hubkolbens synchronisiert ist, dass eine passgenaue Ausrichtung zwischen Öffnung 36 des Behältnisses und des Stopfens 23 bewirkt wird. Anschließend kann das Behältnis 21 über eine Fixierung des Stopfens 23 auf derselben Höhe, bewirkt durch ein entsprechendes Ansteuern des Greifelements 18, durch die Aufwärtsbewegung 10 des Hubkolbens 33 auf dem Mover 1" verschlossen werden (nicht gezeigt).

In weiteren Ausführungsbeispielen handelt es sich bei dem Verschlusselement 22 um einen Plunger 24, eine Kappe 34 und/oder einen Verschlussdeckel 25.

Anschließend wird der Hubkolben 33 durch die Abwärtsbewegung 11 auf die ursprüngliche Position verfahren.

Nach diesem Prozessschritt ist das Erzeugnis 32 ein gefülltes, verschlossenes und geprüftes Behältnis 21, falls die Füllmenge bereits überprüft wurde. Dennoch handelt es sich hierbei um ein noch unverarbeitetes/unprozessiertes Erzeugnis 32, da beispielsweise noch keine Kennzeichnung 54 des Behältnisses 21 aufgebracht ist und weitere Qualitätsrelevanten Merkmale noch nicht überprüft wurden.

Anschließend wird der Mover 1" derart bewegt, dass die Prozessstation 26ʺʺ angefahren werden kann. Bei der Prozessstation 26ʺʺ handelt es sich schließlich um eine Prüfstation 52. An dieser Prüfstation 52 kann beispielsweise überprüft werden, ob das Verschlusselement 22 richtig sitzt. Ferner kann beispielsweise ermittelt werden, ob die korrekte Füllmenge in das Behältnis 21 befüllt wurde, ob Beschädigungen vorhanden sind und/oder ob Partikel in die kontrollierte Umgebung 45 und/oder das Behältnis 21 gelangt sind. Beispielsweise kann auch eine Inspektion des noch unbefüllten Behältnisses 21 auf Beschädigungen vor dem Füllen überprüft werden. Ferner kann beispielsweise ein Kappensitz, eine Crimp-Qualität und/oder eine Markierung, insbesondere eine Markierungsqualität überprüft werden.

werden an dem Behältnis 21 schließlich Qualitätsmerkmale, die nicht schon bereits überprüft wurden, überprüft und letzte Aktionen durchgeführt, beispielsweise für weitere Prozessstationen 26 vorbereitet.

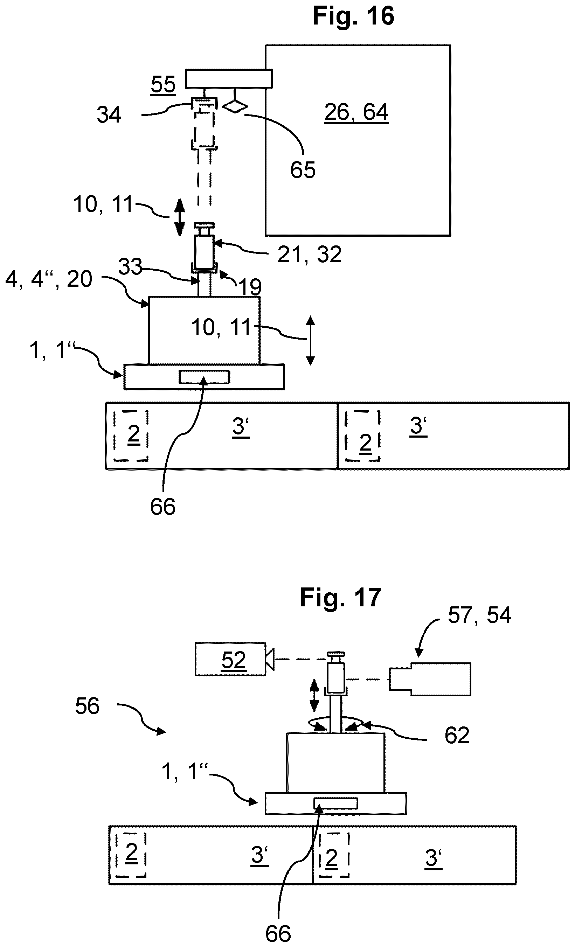

Dabei kann, wie in Fig. 17 näher gezeigt und beschrieben, von der bewegbaren Behältnisaufnahme 19 eine Rotationsbewegung 53, 62 bewirkt werden, wodurch die nicht näher dargestellte Kennzeichnung 54 abgeholt und gleichzeitig vorzugsweise optisch derart überprüft wird, dass sichergestellt werden kann, dass vorbestimmte Qualitätsmerkmale erfüllt sind. Wird nicht schon bereits an der Befüllstation 48 die Füllmenge der pharmazeutischen Flüssigkeit 31 im Behältnis 21 mittels der Waage 38 überprüft, oder ist eine weitere Überprüfung gewünscht, kann dies auch an dieser Station 26ʺʺ erfolgen. Ebenfalls kann eine Überprüfung der verbleibenden Restmenge an Gas, insbesondere Luft und/oder Stickstoff zwischen dem Flüssigkeitsniveau und einem Verschlussmittel ermittelt werden.

Durch diese letzte Prozessstation 26ʺʺ wird aus dem Behältnis 21 somit ein verarbeitetes/prozessiertes Behältnis 21, welches befüllt und verschlossen ist und an dem alle Qualitätsmerkmale geprüft wurden. Das verarbeitete/prozessierte Behältnis 21 kann schließlich abgegeben werden.

Es kann somit gesagt werden, dass zwischen einem Aufnehmen des unverarbeiteten/unprozessierten Erzeugnisses 32 (Aufnehmen des Behältnisses 21 auf dem Verbraucher 4 des Movers 1") und einem Abgeben des verarbeiteten Erzeugnisses 32 (Abgeben des Behältnisses 21 nach der Prüfstation 52) von dem Verbraucher 4 verschiedene Aktionen, jedoch wenigstens eine Aktion, ausgeführt werden/wird. Weitere Aktionen, die von dem Verbraucher 4 durchgeführt werden, werden nachfolgend dargestellt.

Es sei hierbei zu erwähnen, dass die vorgestellten Prozessstationen 26 nicht auf die beschriebenen Prozessstationen 26', 26'', 26‴, 26ʺʺ eingeschränkt sind. Weitere Prozessstationen 26, an denen weitere das Erzeugnis 32 zu verarbeitende Aktionen durchführbar sind bleiben vorbehalten.

Über den gesamten Prozess ist der Funktionsablauf des Verbrauchers 4 mit dem Bewegungsablauf der Transporteinheit 1 zeitlich und/oder örtlich synchronisiert.

Ferner wird angemerkt, dass einzelne oder mehrere Prozessstationen 26 auch von Verbrauchern 4` weiterer Transporteinheiten 1' gebildet sein können, wobei das Erzeugnis 32 hierbei jeweils an den nächsten Verbraucher 4' übergeben werden kann.

Fig. 14 zeigt einen weiteren Verbraucher 4 der Transporteinheit 1, wobei ein Teil 4" des Verbrauchers 4 hierbei ebenfalls von einem Nest 49 gebildet ist, in welchem wiederum mehrere Behältnisse 21 platziert sind, die wiederum in ihrer Aufnahme 19 höhenverstellbar sind. Hierdurchkönnen wiederum Aufwärts- und Abwärtsbewegungen 10, 11 durchgeführt werden, weshalb gesagt werden kann, dass über den Verbraucher 4 die Aktion des Bewegens von einzelnen oder mehreren Erzeugnissen 32 und/oder Nestern 49 in wenigstens einem Freiheitsgrad ausgeführt wird. Im gezeigten Ausführungsbeispiel werden die Behältnisse 21 auf unterschiedliche Höhenniveaus bewegt. Ferner können die Behältnisse 21 von dem in Fig. 3 beschriebenen Roboter 17 über das Greifelement 18 gegriffen werden.

Ferner kann auch vorgesehen sein, dass mehrere Behältnisse 21 auf unterschiedliche Höhenniveaus gehoben werden, auch wenn sich diese nicht in einem Nest 49 befinden.

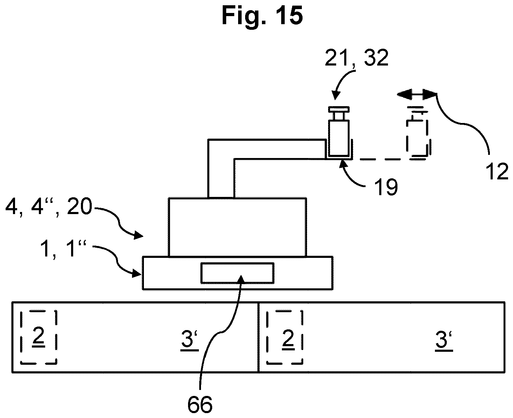

Fig. 15 zeigt im Unterschied zum vorangegangenen Ausführungsbeispiel, dass die Behältnisse 21 auch seitlich bewegt werden können, in dem das Teil 4" über den Verbraucher 4 derart angesteuert und angetrieben wird, dass die Behältnisaufnahme 19 eine Seitwärtsbewegung 12 vollzieht.

Fig. 16 stellt nochmals dar, dass das Erzeugnis 32, hier das Behältnis 21, über den Verbraucher 4, hier ebenfalls die antreibbare Hubvorrichtung 20 als Teil 4" des Verbrauchers 4 mit verfahrbarem Hubkolben 33 und bewegbarer Behältnisaufnahme 19, auf eine Arbeitshöhe 55 der Prozessstation 26 gebracht werden kann. Die Prozessstation 26 ist hierbei eine Crimpingstation 64, über den die oder eine Kappe 34 umgebördelt und das Behältnis 21 verschlossen wird. Dabei kann beispielsweise auch vorgesehen sein, dass zusätzlich eine Rotationsbewegung 62 einer externen Crimpingscheibe zum Durchführen des Crimpingvorgangs erfolgt.

Fig. 17 stellt nochmals ein Ausführungsbeispiel der Prüfstation 52, wie bereits im Ausführungsbeispiel zu Fig. 13 beschrieben, dar. Die Prüfstation 52 hat hierbei eine Inspektionseinrichtung 56 und eine Beschriftungseinheit 57, mit der beispielsweise die Kennzeichnung 54 auf das Behältnis aufgebracht werden kann. Hierzu wird die bewegbare Behältnisaufnahme 19 in eine Rotationsbewegung 62 versetzt, wodurch ein vereinfachtes Aufbringen der Kennzeichnung 54 ermöglicht ist. Parallel dazu wird, durch die Rotationsbewegung 62 das Behältnis von der Inspektionseinrichtung 56 allseitig überprüft, beispielsweise mit einem Auslesegerät für einen QR-Code oder weiteren Identifikationsssystemen, über die die jeweilige Kennzeichnung 54, beispielsweise auch in Form eines RFID-Chips, überprüft werden kann.

In einer nicht näher dargestellten Abbildung sind die Teile 4" des Verbrauchers 4 von einer Pumpe 58, einem Saugnapf 59 und einem Ventilator 60 umfasst. Somit kann beispielsweise die Luft innerhalb der kontrollierten Umgebung 45 bewegt werden.

Fig. 18 zeigt mehrere Behältnisse 21, wobei jedes Behältnis 21 in einer bewegbaren Behältnisaufnahme 19 aufgenommen ist. Jede Behältnisaufnahme 19 ist unabhängig von den anderen Behältnisaufnahmen 19 über den Verbraucher 4 derart ansteuerbar und/oder antreibbar, dass hierdurch eine Seitwärtsbewegung 12 und eine Aufwärts- und Abwärtsbewegung 10, 11 ermöglicht ist. Hierdurch kann durch ein Ansteuern und Antreiben der antreibbaren Behältnisaufnahmen 19 ein Anpassen eines gegenseitigen Abstandes 50 von Öffnungen 36, wie bereits im Ausführungsbeispiel zu Fig. 13 bereits beschrieben, angepasst werden, sodass ein gleichbleibender Abstand 50 der Öffnungen 36 eingestellt werden kann.

In Fig. 19 wiederum wird lediglich eine Seitwärtsbewegung 12 der Behältnisaufnahmen 19 von dem Verbraucher 4 bewirkt, um einen gleichbleibenden oder individuell wählbaren Abstand 50 der Behältnisse 21 einzustellen.

Fig. 20 zeigt, dass zwei Transporteinheiten 1, 1` miteinander zusammenwirken und dass das Erzeugnis 33 von der einen Transporteinheit 1 an die weitere, zweite Transporteinheit 1' übergeben wird. Die Teile 4" der Verbraucher 4, 4' sind hierbei von Greifelementen 18 gebildet, über die das Behältnis 21 übergeben werden kann. Das Greifelement 18, insbesondere der Funktionsablauf des Greifelements (Öffnen/Schließen/Seitwärtsbewegung 12) der Transporteinheit 1 ist hierbei mit dem Funktionsablauf des Greifelements 18 der zweiten Transporteinheit 1' synchronisiert. Zusätzlich sind die Funktionsabläufe jeweils mit den Bewegungsabläufen der Transporteinheiten 1, 1' synchronisiert.

In einem weiteren, nicht gezeigten Ausführungsbeispiel wird von dem Verbraucher 4 die Aktion des Bewirkens einer Schraubbewegung zur Einbringung eines mit einem Gewinde versehenen Elements ausgeführt.

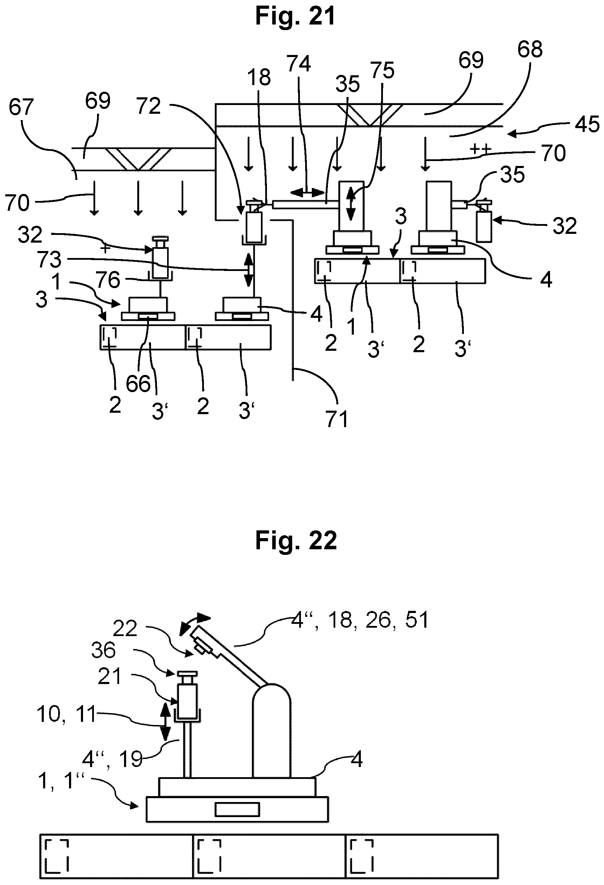

Figur 21 zeigt eine Gebrauchsstellung einer magnetischen levitierbaren Transporteinheit 1 in einer kontrollierten Umgebung 45.

Die kontrollierte Umgebung 45 hat eine erste Kammer 67 und eine zweite Kammer 68, die durch eine Trennwand 71 getrennt sind. Die kontrollierte Umgebung 45 ist hierbei in an sich bekannter Weise als Isolator ausgebildet und hat für jede Kammer 67, 68 eine Luftzufuhr 69, mit der ein beispielsweise laminarer Luftstrom 70 erzeugbar ist.

Die erste Kammer 67 ist mit der zweiten Kammer 68 über eine Transferöffnung 72 verbunden.

Die Ausbildung und Anordnung der Trennwand 71 und der Transferöffnung 72 sind beispielhaft schematisch gezeigt und sind bei weiteren Ausführungsbeispielen abweichend gestaltet. Es können beispielsweise auch mehr als eine Transferöffnung und/oder mehr als eine Trennwand ausgebildet sein.

In der ersten Kammer 67 in Fig. 21 ist eine Anordnung von Kacheln 3' angeordnet, die gemeinsam eine Antriebsfläche 3 bilden. Die einzelnen Kacheln 3' sind hierbei miteinander oder separat voneinander gekapselt, um zu verhindern, dass Partikel in die kontrollierte Umgebung 45 austreten.

Die Kacheln 3' stellen geregelte Magnetfelder bereit, beispielsweise über entsprechende Spulen und/oder über entsprechende bewegliche Permanentmagnete, um die magnetischen levitierbaren Transporteinheiten 1 zu levitieren und zu bewegen.

Die Abbildung zeigt beispielhaft zwei magnetischen levitierbare Transporteinheiten 1, es sind jedoch auch andere Anzahlen denkbar.

Wie bereits beschrieben sind an den Kacheln 3' Sektoren 2 ausgebildet, die eine berührungslose Energieversorgung der magnetischen levitierbaren Transporteinheiten 1 bewirken.

Hierzu weisen die magnetischen levitierbaren

Transporteinheiten 1 jeweils eine Energie-Einkopplungvorrichtung 66 auf. Beispiele für derartige Energie-Einkopplungvorrichtungen 66 sind Pick-up-Spulen, die resonant an den jeweiligen Sektor 2, an dem sich die magnetischen levitierbaren Transporteinheit 1 momentan befindet, koppelbar oder gekoppelt sind. Es sind auch kapazitive Koppelmöglichkeiten oder anderweitige Energieübertragungen berührungsloser Art denkbar.

In der zweiten Kammer 68 sind ebenfalls Kacheln 3' in gleicher oder ähnlicher Weise aufgestellt, die ihrerseits magnetisch levitierbare Transporteinheiten 1 levitieren und bewegen.

Auch hier ist eine berührungslose Energieübertragung von den Kacheln 3' auf die magnetische levitierbaren Transporteinheiten 1, beispielsweise wie zuvor beschrieben, eingerichtet.

Im Prozessfluss gelangen die zu verarbeitenden Erzeugnisse 32, beispielsweise verschlossene pharmazeutische Behältnisse 21, von links in die erste Kammer 67, in der sie mit den levitierbaren Transporteinheiten 1 transportiert werden.

Die Erzeugnisse 32 sind hierbei jeweils in einer Aufnahme 75 abgestellt.

Aus der Abbildung ist ersichtlich, dass die magnetisch levitierbaren Transporteinheiten 1 dazu eingerichtet sind, die jeweils in den Aufnahmen 76 angeordneten Erzeugnisse 32 auf verschiedenen Niveaus zu bewegen, indem die jeweilige Aufnahme 76 entlang einer vertikal orientierten Bewegungsachse 73 bewegbar sind.

Auf diese Weise gelingt es, die Erzeugnisse 32 durch die Transferöffnung 72, die ebenfalls (mit ihrer zugehörigen Normalenrichtung) vertikal ausgerichtet ist, durch die Trennwand 71 in die zweite Kammer 68 ragen zu lassen.

Dort können Sie mit einem Greifelement 18, das an einer magnetisch levitierbaren Transporteinheit 1 in der zweiten Kammer 68 angeordnet ist, aufgenommen werden.

Das Greifelement 18 ist hierbei entlang einer Bewegungsachse 74 horizontal verfahrbarer. Das Greifelement 18 kann somit an das durch die Transferöffnung 72 hindurchragende Erzeugnis 32 herangefahren werden, ohne dass die Transporteinheit 1 ihre Position wechseln muss. Alternativ ist auch denkbar, dass das Bewegungselement 74 nicht bewegbar ist und die horizontale Bewegung durch eine Bewegung der Transporteinheit 1 realisiert wird.

An der Transporteinheit 1 in der zweitem Kammer 68 ist eine zweite Bewegungsachse 75 ausgebildet, welche ein Anheben des Greifelements 18 erlaubt. Es ist auch denkbar, dass alternativ die Bewegung zum Anheben durch die Levitationshöhe der Transporteinheit 1 realisiert wird.

Somit kann das Erzeugnis 32 aus der Transferöffnung 72 entnommen werden.

Anschließend kann der Greifarm 35 wieder eingefahren werden, wie dies an der rechten Transporteinheit 1 in der Kammer 68 illustriert ist. Die Vorrichtung dient daher zur Übergabe eines Behältnisses 21 des Erzeugnisses 32.

Der gezeigte Prozess kann auch in umgekehrter Richtung ablaufen.

Die Bewegungsachsen 73, 74, 75 sind jeweils über die berührungslose Energieübertragung an die Energie-Einkopplungsvorrichtungen 66 - gegebenenfalls über einen mitbewegten Energiespeicher auf der Transporteinheit 1 - antreibbar.

Ist - bei einem weiteren Ausführungsbeispiel - die Transferöffnung 72 beispielsweise (mit ihrer zugehörigen Normalenrichtung) horizontal orientiert, so kann die Transporteinheit 1 in der ersten Kammer 67 mit einer horizontalen Bewegungsachse versehen sein, um eine Übergabe oder ein Durchreichen der Erzeugnisse 32 durch die Transferöffnung 72 zur ermöglichen.

In Figur 21 ist noch dargestellt, dass in der ersten Kammer 67 ein geringerer Luftdruck ("+") herrscht als in der zweiten Kammer 68 ("++").

Dies ist dann von Vorteil, wenn ein Überströmen von der ersten Kammer 67 in die zweite Kammer 68 verhindert oder reduziert werden soll. Ist umgekehrt ein Überströmen von der zweiten Kammer 68 die erste Kammer 67 zu vermeiden, können die Druckerunterschiede auch umgekehrt werden.

Fig. 22 zeigt zwei Teile 4" eines Verbrauchers 4. Der eine Verbraucher 4" bildet ein schwenkbares Greifelement 18 einer Prozessstation, hier der oder einer Verschlussstation 51, über den das Verschlusselement 22 gehalten wird. Das Behältnis 21 wird wiederum über die bewegbare Behältnisaufnahme 19, die den zweiten Teil 4" des Verbrauchers 4 bildet, auf eine bestimmte über eine Aufwärts- und Abwärtsbewegung 10, 11 Höhe verfahren. Durch die Schwenkbewegung des Greifelements kann das Verschlusselement 22, hier der Stopfen 23, somit auf die Öffnung 36 des Behältnisses 21 aufgebracht und das Behältnis 21 verschlossen werden.

Der Erfindung liegt somit die Aufgabe zugrunde, eine magnetisch levitierbare Transporteinheit 1 mit einem über eine Kommunikationsschnittstelle 5 ansprechbaren Verbraucher 4 berührungslos auf wenigstens einem Sektor 2 einer Antriebsfläche 3 mit Energie zu versorgen und einen Bewegungsablauf der Transporteinheit 1 auf der Antriebsfläche 3 auf einen Funktionsablauf des Verbrauchers 4 zu synchronisieren, um wenigstens ein Erzeugnis 33 über von der Transporteinheit 1 anzufahrende Prozessstationen 26 und/oder weitere Verbraucher 4` wenigstens einer weiteren, zweiten Transporteinheit 1` durch wenigstens eine von dem Verbraucher 4 durchgeführten Aktion zu verarbeiten, beziehungsweise zu prozessieren.

### Bezugszeichenliste

- 1: magnetisch levitierbare Transporteinheit
- 1': magnetisch levitierbare Transporteinheit
- 1": Mover
- 2: Sektor
- 3: Antriebsfläche
- 3': Kachel
- 4: Verbraucher
- 4': Verbraucher
- 4'': Teil
- 5: Kommunikationsschnittstelle
- 5': Mittel
- 5": Zeitmessmittel
- 5‴: Geschwindigkeitsmessmittel
- 5ʺʺ: Positionsmessmittel
- 6: Stellweg
- 7: elektrische Funktionseinheit
- 7': Elektromotor
- 8: Vorwärtsbewegung
- 8': Vorwärtsbewegung
- 9: Rückwärtsbewegung
- 9': Rückwärtsbewegung
- 10: Aufwärtsbewegung
- 10': Aufwärtsbewegung
- 11: Abwärtsbewegung
- 11': Abwärtsbewegung
- 12: Seitwärtsbewegung
- 12': Seitwärtsbewegung
- 13: Vorwärtskippbewegung
- 13': Vorwärtskippbewegung
- 14: Rückwärtskippbewegung
- 14': Rückwärtskippbewegung
- 15: seitliche Kippbewegung
- 15': seitliche Kippbewegung
- 15: motorisch angetriebenes Teil
- 16: Roboter
- 17: Greifelement
- 18: bewegbare Behältnisaufnahme
- 19: antreibbare Hubvorrichtung
- 20: Behältnis
- 21: Verschlusselement
- 22: Stopfen
- 23: Plunger
- 24: Verschlussdeckel
- 25: Prozessstation
- 26': Prozessstation
- 26'': Prozessstation
- 26‴: Prozessstation
- 26ʺʺ: Prozessstation
- 26: Füllvorrichtung
- 27: Füllnadel
- 28: Fluid
- 29: Flüssigkeit
- 30: pharmazeutische Flüssigkeit
- 31: Erzeugnis
- 32: Hubkolben
- 33: Kappe
- 34: Greifarm
- 35: Öffnung
- 36: teilmontierte Vorrichtung
- 37: Waage
- 38: montierte Vorrichtung
- 39: Aufnahme
- 40': Aufnahme
- 40: Nährmediumsträger
- 41`: Nährmedium
- 41: Partikelauswertevorrichtung
- 42: Dekontaminationssystem
- 43: Gehäuse
- 44: kontrollierte Umgebung
- 45: Isolator
- 46: Vorbereitungsstation
- 47: Befüllstation
- 48: Nest
- 49: Abstand
- 50: Verschlussstation
- 51: Prüfstation
- 52: Rotationsbewegung
- 53: Kennzeichnung
- 54: Arbeitshöhe
- 55: Inspektionseinrichtung
- 56: Beschriftungseinheit
- 57: Pumpe
- 58: Saugnapf
- 59: Ventilator
- 60: Position
- 61: Rotationsbewegung
- 62': Rotationsbewegung
- 63: Füllnadelausgang
- 64: Crimpiningstation
- 65: Crimpingscheibe
- 66: Energieeinkoppelvorrichtung
- 67: erste Kammer
- 68: zweite Kammer
- 69: Luftzufuhr
- 70: Luftstrom
- 71: Trennwand
- 72: Transferöffnung
- 73: Bewegungsachse
- 74: Bewegungsachse
- 75: Bewegungsachse
- 76: Aufnahme

## Patentansprüche

1. Magnetisch levitierbare Transporteinheit (1), die, insbesondere streckenweise und/oder zeitweise, berührungslos von wenigstens einem Sektor (2) einer Antriebsfläche (3) mit Energie versorgbar und in wenigstens zwei, vorzugsweise wenigstens drei Freiheitsgraden, auf dieser bewegbar ist, wobei die Transporteinheit (1) einen Verbraucher (4) hat, **dadurch gekennzeichnet, dass** eine Kommunikationsschnittstelle (5) ausgebildet ist, über die der Verbraucher (4)und/oder zumindest ein Teil (4") des Verbrauchers (4) berührungslos ansprechbar ist.

2. Magnetisch levitierbare Transporteinheit (1) nach Anspruch 1, **dadurch gekennzeichnet, dass** mit der Kommunikationsschnittstelle (5) ein Stellweg (6) des Verbrauchers (4) und/oder ein Stellweg (6) eines Teils (4") des Verbrauchers (4) auf eine Position (61) und/oder eine Bewegungsrichtung der Transporteinheit (1) und/oder auf eine Position (61) und/oder eine Bewegungsrichtung zumindest eines Teils eines zweiten Verbrauchers (4') abstimmbar ist.

3. Magnetisch levitierbare Transporteinheit (1) nach einem der vorangehenden Ansprüche, **dadurch gekennzeichnet, dass** der Verbraucher (4) und/oder ein Teil (4") des Verbrauchers (4) ein motorisch angetriebenes Teil (16), insbesondere ein Roboter (17) und/oder ein Greifelement (18) und/oder eine bewegbare Behältnisaufnahme (19) ist.

4. Magnetisch levitierbare Transporteinheit (1) nach einem der vorangehenden Ansprüche, **dadurch gekennzeichnet, dass** der Verbraucher (4) und/oder ein Teil (4") des Verbrauchers (4) eine Partikelauswertevorrichtung (42) und/oder ein Luftkeimsammler (x) und/oder ein Dekontaminationssystem (43) ist.

5. Magnetisch levitierbare Transporteinheit (1) nach einem der vorangehenden Ansprüche, **dadurch gekennzeichnet, dass** der Verbraucher (4) und/oder ein Teil (4") des Verbrauchers (4) eine antreibbare Hubvorrichtung (20) ist, insbesondere zum Anfahren eines Verschlusselements (22), vorzugsweise eines Stopfens (23), eines Plungers (24), einer Kappe (34) und/oder eines Verschlussdeckels (25), und/oder insbesondere zum Anfahren einer Füllvorrichtung (27), insbesondere einer Füllnadel (28), vorzugsweise mit einem auf der Hubvorrichtung (20) befindlichen Behältnis (21) und/oder wobei der Verbraucher und/oder ein Teil (4") des Verbrauchers (4) eine, vorzugsweise bewegbare, Aufnahme (40, 40`) für ein Nährmediumsträger (41), in dem vorzugsweise ein Nährmedium (41') präsentierbar ist, ist und/oder wobei die Transporteinheit (1) mit einem vorzugsweise abgedichteten Gehäuse (44) ausgebildet ist.

6. Magnetisch levitierbare Transporteinheit (1) nach einem der vorangehenden Ansprüche, **dadurch gekennzeichnet, dass** die Transporteinheit (1) in einer kontrollierten Umgebung (45), insbesondere einem Isolator und/oder einem RABS, ausgebildet ist.

7. Magnetisch levitierbare Transporteinheit (1) nach dem Oberbegriff von Anspruch 1 oder nach Anspruch 1, **gekennzeichnet durch** Mittel (5') zur, insbesondere zeitlichen und/oder örtlichen, Synchronisation eines Funktionsablaufs des Verbrauchers(4) und/oder einem Teil des Verbrauchers mit einem Bewegungsablauf der Transporteinheit (1) und/oder einer Prozessstation (26).

8. Magnetisch levitierbare Transporteinheit (1) nach dem vorangehenden Anspruch, **dadurch gekennzeichnet, dass** die Mittel (5') wenigstens eine Kommunikationsschnittstelle (5), ein Zeitmessmittel (5"), ein Positionsmessmittel (5ʺʺ) und/oder ein Geschwindigkeitsmessmittel (5‴) umfassen.

9. Verwendung einer magnetisch levitierbaren Transporteinheit (1), insbesondere einer magnetisch levitierbaren Transporteinheit (1) nach dem Oberbegriff von Anspruch 1 oder nach einem der vorangehenden Ansprüche, wobei die Transporteinheit (1), insbesondere streckenweise und/oder zeitweise, mit Energie versorgbar ist und/oder diese vorzugsweise zwischenspeichert, wobei sich die Transporteinheit (1) in einer kontrollierten Umgebung (45) befindet, wobei die Transporteinheit (1) zu verarbeitende Erzeugnisse (32) transportiert, wobei zwischen einem Aufnehmen eines unverarbeiteten/unprozessierten Erzeugnisses (32) und/oder Abgeben eines verarbeiteten/prozessierten Erzeugnisses (32) wenigstens eine der folgenden Aktionen von dem oder einem Verbraucher (4) und/oder von dem oder einem Teil (4") des Verbrauchers (4) der Transporteinheit (1) ausgeführt wird:
• Bewegen von einzelnen oder mehreren Erzeugnissen (32) und/oder Nestern (49), in wenigstens einem Freiheitsgrad, insbesondere auf verschiedene Niveaus in wenigstens einem Freiheitsgrad,
• Heranführen des oder eines Behältnisses (21) an eine Prozessstation (26),
• Bewirken einer Rotationsbewegung des oder eines Behältnisses (21),
• Bewegen, insbesondere Rühren und/oder Pumpen, eines Fluids (29), insbesondere einer Flüssigkeit (30) und/oder eines Gases,
• Anpassen eines gegenseitigen Abstandes (50) von Öffnungen (36) von zu bearbeitenden Behältnissen (21), vorzugsweise derart, dass ein gleichbleibender Abstand (50) einstellbar ist,
• Übergabe des oder eines Behältnisses (21),
• Steuern eines Greifelements (18), insbesondere eines Greifarms (35),
• Bewirken einer Schraubbewegung zur Einbringung eines mit einem Gewinde versehenen Elements,
• Steuern und/oder Antreiben wenigstens einer elektrischen Funktionseinheit (7),
• Verschließen des oder eines Behältnisses (21) durch Anbringung wenigstens eines Verschlusselements (22), insbesondere eines Stopfens (23), eines Verschlussdeckels (25), einer Kappe (34) und/oder eines Plungers (24), wobei eine Schließbewegung auf der oder einer Transporteinheit (1) erfolgt,
• Bewirken einer Bewegung, insbesondere einer Rotationsbewegung, zum Abholen einer Kennzeichnung (54)

10. Verwendung einer magnetisch levitierbaren Transporteinheit (1) nach dem vorangehenden Anspruch, **dadurch gekennzeichnet, dass** das unverarbeitete/unprozessierte Erzeugnis (32) ein leeres Behältnis (21), ein gefülltes, nicht geprüftes Behältnis (21) und/oder ein gefülltes, unverschlossenes Behältnis (21) und/oder ein gefülltes, verschlossenes Behältnis (21) ist.

11. Verwendung einer magnetisch levitierbaren Transporteinheit (1) nach einem auf eine Verwendung gerichteten Ansprüche, **dadurch gekennzeichnet, dass** das verarbeitete/prozessierte Erzeugnis (32) ein befülltes Behältnis (21), ein befülltes, geprüftes Behältnis (21) und/oder ein befülltes, verschlossenes Behältnis (21) ist.

12. Verwendung einer magnetisch levitierbaren Transporteinheit (1) nach einem der vorangehenden, auf eine Verwendung gerichteten Ansprüche, **dadurch gekennzeichnet, dass** das unverarbeitete/unprozessierte Erzeugnis (32) eine teilmontierte Vorrichtung (37), vorzugsweise aus dem medizinischen Bereich, ist.

13. Verwendung einer magnetisch levitierbaren Transporteinheit (1) nach einem auf eine Verwendung gerichteten Ansprüche, **dadurch gekennzeichnet, dass** das verarbeitete/prozessierte Erzeugnis (32) eine montierte Vorrichtung (39), vorzugsweise aus dem medizinischen Bereich, ist.
